# EUROPÄISCHE PATENTSCHRIFT

(11) **EP 3 455 032 B1**
(45) Veröffentlichungstag und Bekanntmachung des Hinweises auf die Patenterteilung: **04.05.2022**
(21) Anmeldenummer: 16723105.9
(22) Anmeldetag: 13.05.2016
(51) Int. Cl.: B24C 1/00, B24C 11/00, C01B 32/55

(54) **VORRICHTUNG ZUR HERSTELLUNG VON CO2-PELLETS AUS CO2-SCHNEE UND REINIGUNGSGERÄT**
DEVICE FOR PRODUCING CO2 PELLETS FROM CO2 SNOW, AND CLEANING DEVICE
DISPOSITIF POUR FABRIQUER DES PELLETS DE CO2 À PARTIR DE NEIGE CARBONIQUE ET APPAREIL DE NETTOYAGE

(43) Veröffentlichungstag der Anmeldung: 20.03.2019
(73) Patentinhaber: Alfred Kärcher SE & Co. KG, 71364 Winnenden (DE)
(72) Erfinder: DE SILVA, Ruwantha, 71701 Schwieberdingen (DE); GAßMANN, Jürgen, 71364 Winnenden (DE); HAYN, Henning, 70190 Stuttgart (DE); PLACHKE, Dieter, 71364 Winnenden (DE)
(74) Vertreter: Hoeger, Stellrecht & Partner Patentanwälte mbB
(86) Internationale Anmeldenummer: PCT/EP2016/060913
(87) Internationale Veröffentlichungsnummer: WO 2017/194175

(56) Entgegenhaltungen:
- EP-A1- 1 328 765
- WO-A1-95/27591
- FR-A- 831 571
- JP-A- H10 138 141
- US-A- 5 845 516

## Beschreibung

Die vorliegende Erfindung betrifft eine Vorrichtung zur Herstellung von hochfesten CO₂-Pellets aus CO₂-Schnee, insbesondere für ein Reinigungsgerät zum Bestrahlen von zu behandelnden Oberflächen mit einem Gemischstrom aus einem Druckgas und CO₂-Pellets, umfassend eine Hauptverdichtungseinrichtung zum Verdichten von CO₂-Schnee zur Ausbildung von CO₂-Pellets und eine Vorverdichtungseinrichtung zum Vorverdichten von durch Entspannen von flüssigem CO₂ erzeugten CO₂-Schnees.

Ferner betrifft die vorliegende Erfindung ein Reinigungsgerät zum Bestrahlen von zu behandelnden Oberflächen mit einem Gemischstrom aus einem Druckgas und CO₂-Pellets.

Aus der DE 10 2008 036 331 B3 ist eine Strahleinrichtung zum Bestrahlen von zu behandelnden Oberflächen mit einem Gemischstrom aus einem Druckgas und Trockeneis-Pellets bekannt. Diese umfasst einen Schneckenförderer, welcher CO₂-Schnee durch eine Matrize drückt, um so CO₂-Pellets herzustellen. Ein Nachteil der bekannten Strahleinrichtungen ist insbesondere, dass mit der genutzten Verdichtungseinrichtung nur CO₂-Pellets mit einer sehr inhomogenen Dichteverteilung einer Dichte der erzeugten CO₂-Pellets und damit nur mit sehr unterschiedlicher Qualität hergestellt werden kann. Insbesondere ist die Dichte der erzeugten CO₂-Pellets für eine effiziente Reinigung von Oberflächen durch Bestrahlen nicht immer ausreichend.

Aus der EP 1 328 765 A1 ist eine Pressvorrichtung zum Erzeugen von Trockeneispellets nach den Oberbegriff des Anspruchs 1 bekannt. In der FR 831 571 A ist ein Verfahren zur Herstellung von Trockeneis beschrieben. Verfahren und Vorrichtungen zum Beschleunigen eines Trockeneisstrahls in einer Strahlvorrichtung zum Abtragen und Reinigen von Farbfilmen durch Bestrahlen mit Trockeneis sind in der JP H10 138141 A offenbart. Vorrichtungen und Verfahren zum Erzeugen von Trockeneispellets sind aus der US 5,845,516 und der WO 95/27591 A1 bekannt. In der DE 10 2008 036 331 B3 ist eine Strahleinrichtung zum Bestrahlen von zu behandelnden Oberflächen beschrieben.

Es ist daher eine Aufgabe der vorliegenden Erfindung, eine Vorrichtung und ein Reinigungsgeräts der eingangs beschriebenen Art so zu verbessern, dass CO₂-Pellets mit möglichst hoher Dichte herstellbar sind.

Diese Aufgabe wird bei einer Vorrichtung der eingangs beschriebenen Art erfindungsgemäß dadurch gelöst, dass die Vorverdichtungseinrichtung in Form einer strömungsmechanischen Vorverdichtungseinrichtung ausgebildet ist, dass die Vorverdichtungseinrichtung eine Expansionseinrichtung zum Erzeugen von CO₂-Schnee aus flüssigem oder gasförmigem CO₂ und eine Vorverdichtungskammer zum Aufnehmen und Vorverdichten des erzeugten CO₂-Schnees umfasst und dass die Expansionseinrichtung und die Vorverdichtungskammer miteinander fluidwirksam verbunden sind.

Bei einer Vorrichtung zur Herstellung von hochfesten CO₂-Pellets zusätzlich zur Hauptverdichtungseinrichtung eine Vorverdichtungseinrichtung vorzusehen, hat insbesondere den Vorteil, dass erzeugter CO₂-Schnee, der beispielsweise durch Expansion von flüssigem CO₂ gebildet wird, nicht nur durch die Hauptverdichtungseinrichtung verdichtet wird, sondern schon bereits vorverdichtet zur Hauptverdichtungseinrichtung gelangen und von dieser dann noch weiter verdichtet werden kann. So lassen sich auf einfache Weise CO₂-Pellets, auch als Trockeneis-Pellets bezeichnet, im Vergleich zu herkömmlichen Vorrichtungen zur Herstellung von CO₂-Pellets mit deutlich höherer Dichte herstellen. Je höher jedoch die Dichte der CO₂-Pellets ist, umso besser ihre Reinigungswirkung beim Beaufschlagen einer zu reinigenden Fläche mit den CO₂-Pellets. Wird die Vorverdichtungseinrichtung insbesondere in Form einer strömungsmechanischen Vorverdichtungseinrichtung ausgebildet, auch als fluidmechanische Vorverdichtungseinrichtung bezeichnet, kann insbesondere ein konstruktiver und apparativer Aufwand zur Ausbildung der Vorrichtung deutlich verringert werden. Bei einer strömungsmechanischen Vorverdichtungseinrichtung macht man sich zu Nutze, dass es durch eine Bewegung des bei Expansion von flüssigem CO₂ entstehenden Schnees bei geeigneter Ausbildung und Ausrichtung einer Strömung sowohl des expandierenden flüssigen CO₂ als auch des erzeugten CO₂-Schnees, zu einer gewünschten Vorverdichtung des CO₂-Schnees kommt. Dies kann beispielsweise erfolgen durch Agglomeration von CO₂-Schnee in bestimmten Bereichen der Vorverdichtungseinrichtung, beispielsweise an inneren Wandflächen derselben. Auf einfache Weise lässt sich eine solche strömungsmechanische Vorverdichtung erreichen, wenn der erzeugte CO₂-Schnee sich nicht entlang einer Hauptachse der Vorverdichtungseinrichtung bewegt, sondern schräg zu dieser verlaufend, so dass ein Kontakt mit einer inneren Wandfläche der Vorverdichtungseinrichtung ermöglicht wird. So kommt es allein aufgrund der Strömung des erzeugten CO₂-Schnees in der Vorverdichtungseinrichtung zu einer Agglomeration und Vorverdichtung des CO₂-Schnees, der dann mit der Hauptverdichtungseinrichtung weiter zu hochfesten CO₂-Pellets mit hoher Dichte weiter verdichtet werden kann.

Günstig ist es, wenn die Vorverdichtungseinrichtung eine Expansionseinrichtung zum Erzeugen von CO₂-Schnee aus flüssigem oder gasförmigem CO₂ und eine Vorverdichtungskammer zum Aufnehmen und Vorverdichten des erzeugten CO₂-Schnees umfasst und wenn die Expansionseinrichtung und die Vorverdichtungskammer miteinander fluidwirksam verbunden sind. Mit einer solchen Vorverdichtungseinrichtung kann mittels der Expansionseinrichtung zunächst CO₂-Schnee erzeugt werden. Durch die fluidwirksame Verbindung der Expansionseinrichtung mit der Vorverdichtungskammer kann der gesamte erzeugte CO₂-Schnee von der Vorverdichtungskammer aufgenommen und in dieser zu vorverdichtetem CO₂-Schnee weiter verdichtet und dann der Hauptverdichtungseinrichtung zugeführt werden. Durch die fluidwirksame Verbindung der Expansionseinrichtung der Vorverdichtungskammer kann zudem erreicht werden, dass es zu keiner Verstopfung der Vorverdichtungskammer kommt. Der nachströmende, unter Druck des sich expandierenden flüssigen CO₂ in die Vorverdichtungskammer einströmende CO₂-Schnee reicht aus, um beispielsweise an einer Innenwandfläche der Vorverdichtungskammer angelagerten, agglomerierten und so vorverdichteten CO₂-Schnee wieder von der Innenwandfläche durch die in der Strömung wirkenden Kräfte zu lösen und so auch der Hauptverdichtungseinrichtung zuzuführen.

Vorteilhaft ist es, wenn die strömungsmechanische Vorverdichtungseinrichtung ausgebildet ist zum Erzeugen eines gasförmigen CO₂-Stroms in der Vorverdichtungskammer, welcher mindestens teilweise auf eine Innenwandfläche der Vorverdichtungskammer ausgerichtet ist. Die Vorverdichtungseinrichtung derart auszubilden, ermöglicht zum einen eine Agglomeration von CO₂-Schnee auf der Innenwandfläche. Dies wird insbesondere dadurch erreicht, dass der CO₂-Strom mindestens teilweise auf die Innenwandfläche ausgerichtet ist. Zum anderen verhindert genau ein derart ausgerichteter CO₂-Strom, dass es zu einer immer weiter zunehmenden Agglomeration von CO₂-Schnee an der Innenwandfläche kommt, denn der gasförmige CO₂-Strom, löst auch wieder den bereits agglomerierten CO₂-Schnee von der Innenwandfläche. Damit wird zum einen CO₂-Schnee vorverdichtet und zum anderen eine Verstopfung der Vorverdichtungskammer durch eine kontinuierlich zunehmende Agglomeration von CO₂-Schnee verhindert.

Vorzugsweise ist die strömungsmechanische Vorverdichtungseinrichtung ausgebildet zum Erzeugen eines spiralförmigen oder im Wesentlichen spiralförmigen gasförmigen CO₂-Stroms in der Vorverdichtungskammer. Diese Ausgestaltung hat den Vorteil, dass das flüssige CO₂ bei der Expansion teilweise gasförmig wird und das verfestigte CO₂ als CO₂-Schnee längs des definierten Stroms durch die Vorverdichtungskammer bewegen kann. Ein spiralförmiger Strom aus gasförmigem CO₂ und CO₂-Schnee bewirkt dann wiederum zum einen eine teilweise Agglomeration von CO₂-Schnee auf der Innenwandfläche und zum anderen das Reinigen der Innenwandfläche von bereits voragglomeriertem CO₂-Schnee, um ein Verstopfen der Vorverdichtungskammer zu verhindern. Durch diese selbstreinigende Eigenschaft der vorgeschlagenen Vorverdichtungseinrichtung kann die Vorrichtung zur Herstellung von CO₂-Pellets auch im Dauerbetrieb genutzt werden.

Günstigerweise umfasst die Expansionseinrichtung eine Entspannungsdüse zum Entspannen von flüssigem oder gasförmigem CO₂. Durch Expansion kann sich flüssiges oder gasförmiges CO₂ so weit abkühlen, dass CO₂-Schnee entsteht.

Vorteilhaft ist es, wenn die Entspannungsdüse angeordnet und ausgebildet ist zum Abgeben von flüssigem CO₂ in die Vorverdichtungskammer hinein. Auf diese Weise kann insbesondere bei einer Abdichtung der Vorverdichtungskammer relativ zur Expansionseinrichtung verhindert werden, dass Wassereis in der Vorverdichtungskammer entsteht, welches zu einer Verstopfung der Vorverdichtungskammer führen könnte.

Gemäß einer weiteren bevorzugten Ausführungsform der Erfindung kann vorgesehen sein, dass die Vorverdichtungskammer einen eine Einlasslängsachse definierenden Einlass aufweist, dass die Entspannungsdüse mindestens eine Düsenaustrittsöffnung aufweist, dass die Düsenaustrittsöffnung eine Düsenaustrittslängsachse definiert und dass die Längsachse und die Düsenaustrittslängsachse zwischen sich einen Einlasswinkel definieren, welcher in einem Bereich von etwa 0° bis etwa 90° liegt. So kann beispielsweise flüssiges CO₂ parallel zur Einlasslängsachse in die Vorverdichtungskammer eintreten oder quer, insbesondere senkrecht dazu. Ansonsten ist jede beliebige Ausrichtung zwischen diesen beiden extremen Ausrichtungen möglich. So lassen sich insbesondere spiralförmige Strömungen erzeugen, wenn der Einlasswinkel zwischen 0° und 90° liegt, beispielsweise etwa 45° beträgt.

Vorzugsweise schneiden die Düsenaustrittslängsachse und die Einlasslängsachse einander oder verlaufen windschief zueinander oder parallel zueinander. Die Entspannungsdüse kann entsprechend angeordnet werden mit ihrem Düsenauslass derart, dass die Düsenaustrittslängsachse und die Einlasslängsachse die beschriebenen relativen Verläufe zueinander definieren.

Um auf einfache Weise eine Bewegung des erzeugten CO₂-Schnees längs einer gekrümmten Bewegungsbahn zu erhalten, ist es vorteilhaft, wenn die Entspannungsdüse in Form einer Drall- oder Rotordüse ausgebildet ist. Eine Dralldüse definiert eine im Wesentlichen stets gleichbleibende Strömung von CO₂-Schnee in die Vorverdichtungskammer hinein und durch diese hindurch. Bei einer Rotordüse ändert sich eine Strömungsrichtung sowohl beim Einströmen in die Vorverdichtungskammer hinein als auch beim Durchströmen durch diese hindurch ständig. So kann insbesondere mit einer Rotordüse ein Verstopfen der Vorverdichtungskammer sehr wirkungsvoll verhindert werden, da sich CO₂-Schnee nicht immer an denselben Stellen der Innenwandfläche der Vorverdichtungskammer ablagern kann.

Besonders kostengünstig und auf einfache Weise ausbilden lässt sich die Vorrichtung, wenn die Vorverdichtungskammer in Form eines Rohrs ausgebildet ist. Ein Rohr kann insbesondere einen kreisförmigen, ovalen oder vieleckigen Querschnitt aufweisen. Solche Rohre lassen sich auf einfache Weise herstellen und können zudem eine Expansionseinrichtung und eine Hauptverdichtungseinrichtung auf einfache Weise fluidwirksam miteinander verbinden.

Vorzugsweise definiert die Vorverdichtungskammer eine Längsachse. Die Vorverdichtungskammer kann also insbesondere komplett geradlinig ausgebildet sein. In einem solchen Fall ist die Entspannungseinrichtung vorzugsweise derart ausgebildet, dass ein in die Vorverdichtungskammer hineinströmender CO₂-Strom nicht parallel zur Längsachse der Vorverdichtungskammer verläuft, sondern quer zu dieser. Insbesondere ist eine spiralförmige oder schneckenförmige Bewegungsbahn des erzeugten CO₂-Schnees vorteilhaft, um eine Vorverdichtung von CO₂-Schnee innerhalb der Vorverdichtungskammer in der beschriebenen Weise zu erreichen.

Vorteilhaft ist es, wenn die Vorverdichtungskammer gekrümmt ausgebildet ist. Sie kann also insbesondere in Form eines gekrümmten Rohrs ausgebildet sein. Bei einer gekrümmten Vorverdichtungskammer ist es insbesondere möglich, die Entspannungsdüse so auszurichten, dass deren Düsenaustrittslängsachse parallel mit der Einlasslängsachse verläuft, also CO₂-Schnee in die Vorverdichtungskammer hinein erzeugt wird und zunächst koaxial zur Vorverdichtungskammer strömen kann. Durch die Krümmung der Vorverdichtungskammer kann dann CO₂-Schnee auf eine gekrümmte Innenwandfläche der Vorverdichtungskammer auftreffen und so zu vorverdichtetem CO₂-Schnee agglomerieren. Ist eine Innenwandfläche der Vorverdichtungskammer völlig kantenfrei, kann zudem auf einfache Weise ein Verstopfen der Vorverdichtungskammer verhindert werden. Würde als Agglomerationsbereich lediglich eine ebene, dem CO₂-Strom entgegen gerichtete Prallfläche vorgesehen, würde ein Verstopfungsrisiko während des Betriebs der Vorrichtung signifikant erhöht werden.

Günstig ist es, wenn die Auslasslängsachse und die Einlasslängsachse zwischen sich einen Kammerwinkel einschließen, welcher in einem Bereich von etwa 0° bis etwa 180° liegt, insbesondere in einem Bereich von etwa 45° bis etwa 135°. Vorzugsweise beträgt der Kammerwinkel etwa 90°. Ein Kammerwinkel von 0° ergibt sich beispielsweise bei einer Vorverdichtungskammer in Form eines geradlinig verlaufenden Rohrs. Ein Kammerwinkel von 180° kann vorgegeben werden durch eine im Wesentlichen U-förmig verlaufende Vorverdichtungskammer, die insbesondere aus einem Rohr gebogen werden kann. Ein Kammerwinkel von 90° entspricht einer Vorverdichtungskammer, die eine gekrümmte Hauptachse aufweist, insbesondere in Form eines Viertelkreises oder einer Viertelellipse.

Ferner kann es günstig sein, wenn die Vorverdichtungskammer einen Durchmesser und eine Länge aufweist und wenn ein Verhältnis zwischen Länge und Durchmesser in einem Bereich von etwa 4:1 bis etwa 20:1 liegt. Insbesondere kann das Verhältnis in einem Bereich von etwa 6:1 bis etwa 14:1 liegen. Wieter insbesondere kann das Verhältnis etwa 7,5:1 betragen. Eine Vorverdichtungskammer in der beschriebenen Weise zu konfektionieren ermöglicht eine besonders effiziente Vorverdichtung von CO₂-Schnee.

Um eine optimale Vorverdichtung von CO₂-Schnee in der Vorverdichtungskammer zu erreichen und gleichzeitig wirkungsvoll ein Verstopfen derselben zu verhindern und somit einen Dauerbetrieb der Vorrichtung zu ermöglichen, ist es vorteilhaft, wenn die Vorverdichtungskammer einen Krümmungsradius aufweist und wenn ein Verhältnis zwischen Krümmungsradius und Durchmesser in einem Bereich von etwa 2:1 bis etwa 10:1 liegt. Insbesondere kann das Verhältnis in einem Bereich von etwa 2:1 bis etwa 6:1 liegen. Weiter insbesondere kann das Verhältnis etwa 2,4:1 betragen.

Vorteilhaft ist es, wenn die Vorverdichtungseinrichtung eine mechanische Vorverdichtungseinrichtung umfasst mit mindestens einem bewegbaren angeordneten Vorverdichtungselement zum Komprimieren des erzeugten CO₂-Schnees in der Vorverdichtungskammer. Insbesondere kann das mindestens eine Vorverdichtungselement alternativ oder zusätzlich zur strömungsmechanischen Ausbildung der Vorverdichtungseinrichtung vorgesehen sein. Mit dem mindestens einen bewegbar angeordneten Vorverdichtungselement kann CO₂-Schnee in definierter Weise vorkomprimiert werden, sodass er vorkomprimiert der Hauptverdichtungseinrichtung zugeführt werden kann. Zum Bewegen des Vorverdichtungselements kann ein separater Antrieb vorgesehen sein.

Auf einfache Weise ausbilden lässt sich eine mechanische Vorverdichtungseinrichtung, wenn das mindestens eine Vorverdichtungselement in Form eines Druckglieds, insbesondere in Form eines Stempels oder eines Kolbens, oder in Form einer Walze ausgebildet ist.

Ferner ist es günstig, wenn die Vorverdichtungseinrichtung einen CO₂-Anschluss zum Verbinden mit einer flüssiges CO₂ enthaltenden CO₂-Quelle umfasst. Diese Ausgestaltung ermöglicht es insbesondere, die Vorrichtung in Verbindung mit einem mobilen Reinigungsgerät zu nutzen.

Vorzugsweise steht der CO₂-Anschluss in fluidwirksamer Verbindung mit der Entspannungseinrichtung, insbesondere mit der Entspannungsdüse. So lässt sich auf einfache Weise CO₂-Schnee erzeugen.

Vorteilhaft ist es, wenn die Vorrichtung eine flüssiges CO₂ enthaltende CO₂-Quelle umfasst, die mit der Vorverdichtungseinrichtung fluidwirksam verbunden ist. Auf diese Weise kann insbesondere eine Vorrichtung für einen mobilen Betrieb oder Einsatz ausgebildet werden.

Einfach und kostengünstig ausbilden und einsetzen lässt sich die Vorrichtung, wenn die CO₂-Quelle ein flüssiges CO₂ enthaltender Druckbehälter ist. So lässt sich flüssiges CO₂ einfach und kostengünstig bevorraten und für eine mobile Vorrichtung zum Erzeugen von Pellets nutzen.

Auf einfache Weise lässt sich flüssiges CO₂ zur Vorverdichtungseinrichtung leiten, wenn die flüssige CO₂-Quelle über eine Verbindungsleitung fluidwirksam mit der Vorverdichtungseinrichtung verbunden ist.

Gemäß einer weiteren bevorzugten Ausführungsform der Erfindung kann vorgesehen sein, dass die Hauptverdichtungseinrichtung in Form einer Extrudiereinrichtung ausgebildet ist. Mit einer solchen Extrudiereinrichtung lassen sich CO₂-Pellets insbesondere mit einer definierten Querschnittsfläche herstellen.

Günstigerweise umfasst die Extrudiereinrichtung mindestens eine Extrusionsmatrize mit einer Mehrzahl von Durchbrechungen. So können gleichzeitig mehrere CO₂-Stränge zur Ausbildung von CO₂-Pellets erzeugt werden. Dabei ist es insbesondere vorteilhaft, wenn die mindestens eine Extrusionsmatrize drehbar angeordnet ist. Beispielsweise kann sie Teil eines nachfolgend noch beschriebenen Verdichterrads und/oder eines korrespondierenden Aufnahmerads sein. So lässt sich auf besonders einfache und kompakte Weise ein Zahnradverdichter mit Extrudiereinrichtung ausbilden. Die Extrusionsmatrize kann insbesondere am Verdichterrad und/oder am Aufnahmerad angeordnet oder ausgebildet sein, sodass CO₂- Pellets beispielsweise durch radiale Extrusion, insbesondere von außen nach innen in Richtung auf eine Drehachse des Verdichterrads beziehungsweise des Aufnahmerads hin, hergestellt werden können, indem CO₂-Schnee durch geeignet geformte Durchbrechungen hindurch komprimiert wird, die beispielsweise mit am Verdichterrad und am Aufnahmerad ausgebildeten Schneeaufnahmen in Fluidverbindung stehen. Die Extrusionsmatrize kann also insbesondere in das Verdichterrad und/oder das Aufnahmerad bildende, jeweils außen verzahnte Zahnräder integriert sein. Die Zahnräder können insbesondere schräg verzahnt sein. Beispielsweise können die Durchbrechungen Verdichtungselemente durchsetzen, also zum Beispiel Zähne der Zahnräder. Alternativ oder zusätzlich ist es auch möglich, dass Durchbrechungen vorgesehen sind, welche das Verdichterrad und/oder das Aufnahmerad zwischen benachbarten Verdichtungselementen durchsetzen und direkt in Schneeaufnahmen münden. Dies kann insbesondere dadurch realisiert werden, dass Durchbrechungen auf einer Außenseite des Verdichterrads oder des Aufnahmerads zwischen Zähnen derselben enden.

Vorzugsweise ist die Extrudiereinrichtung in Form eines Zahnradverdichters ausgebildet. Wie vorstehend bereits erläutert, können so auf einfache Weise und in einem kontinuierlichen Prozess CO₂-Pellets in Strangform extrudiert werden.

Besonders einfach und kompakt ausbilden lässt sich die Vorrichtung, wenn der Zahnradverdichter mindestens ein um eine erste Drehachse rotierbar gelagertes Verdichterrad mit einer Mehrzahl von Verdichtungselementen und mindestens ein mit dem mindestens einen Verdichterrad zusammenwirkendes, um eine zweite Drehachse rotierbar gelagertes Aufnahmerad mit einer Mehrzahl von korrespondierend zu den Verdichtungselementen ausgebildeten Schneeaufnahmen zum Aufnehmen von CO₂-Schnee umfasst. Insbesondere können das Verdichterrad und das Aufnahmerad identisch ausgebildet sein und so auch gleichzeitig identische Funktionen ausüben. Zudem kann für die Funktion des Zahnradverdichters ein Antrieb vorgesehen sein, welcher das Verdichterrad und/oder das Aufnahmerad antreibt. Sind das Verdichterrad und das Aufnahmerad schrägverzahnt, ist das eine linksschräg und das andere rechtsschräg verzahnt.

Der Aufbau der Vorrichtung vereinfacht sich weiter, wenn die erste und die zweite Drehachse parallel oder im Wesentlichen parallel zueinander verlaufen.

Günstigerweise ist die Mehrzahl von Verdichtungselementen in Form von in radialer Richtung vom Verdichterrad abstehenden Zähnen ausgebildet und/oder ist die Mehrzahl von Schneeaufnahmen in Form von in radialer Richtung geöffneten Vertiefungen ausgebildet. Beispielsweise können konventionelle Zahnräder zur Ausbildung des Verdichterrads genutzt werden. Insbesondere können auch zwei oder mehr Verdichterräder zum Einsatz kommen. Beispielsweise können deren Zähne in Umfangsrichtung versetzt angeordnet sein, so dass Zähne benachbarter Zahnräder auf Höhe der Zahnzwischenräume angeordnet sind. Zähne des Verdichterrads können zudem auf einfache Weise mit Zähnen des Aufnahmerads kämmen, wobei die Schneeaufnahmen zwischen Zähnen des Aufnahmerads ausgebildet sind. So kann insbesondere durch identische Ausbildung des Verdichterrads und des Aufnahmerads auch, wie bereits erwähnt, eine Funktion beider Räder kombiniert werden.

Besonders einfach werden der Aufbau und die Herstellung der Vorrichtung, wenn das mindestens eine Verdichterrad und das mindestens eine Aufnahmerad identisch oder im Wesentlichen identisch ausgebildet sind. Beispielsweise können das mindestens eine Verdichterrad und das mindestens eine Aufnahmerad in Form identischer Zahnräder ausgebildet sein, wobei jeweils Zahnzwischenräume zwischen Verdichtungselemente ausbildenden Zähnen der Zahnräder Schneeaufnahmen ausbilden. Zudem lässt sich so auch eine besonders kompakte Vorrichtung zur Herstellung von CO₂-Pellets aus CO₂-Schnee ausbilden.

Ferner ist es vorteilhaft, wenn jede der Mehrzahl von Durchbrechungen eine Längsachse definiert, die sich radialer oder im Wesentlichen in radialer Richtung von der ersten oder zweiten Drehachse weg erstreckt. So lässt sich insbesondere eine zylindrische Extrusionsmatrize ausbilden. Durch die Anordnung der Durchbrechungen ist es insbesondere möglich, dass die Verdichtungselemente CO₂-Schnee in den Schneeaufnahmen durch dafür vorgesehene Durchbrechungen hindurchpressen.

Vorzugsweise steht jede Schneeaufnahme mit mindestens einer Durchbrechung in Fluidverbindung. Dies ist insbesondere möglich, wenn die Durchbrechung in die Schneeaufnahme mündet oder wenn die Durchbrechung ein Verdichtungselement durchsetzt, welches Verdichtungselement mit einer Schneeaufnahme zusammenwirkt. Steht jede Schneeaufnahme mit genau einer Durchbrechung in Fluidverbindung, so kann durch das Zusammenwirken eines Verdichtungselements und einer Schneeaufnahme beim Ineinandergreifen derselben genau ein CO₂-Pellet gebildet werden. Die Anzahl der über den Umfang des Verdichterrads verteilten Verdichtungselemente sowie der über den Umfang verteilten Schneeaufnahmen des Aufnahmerads bestimmt somit die Zahl der pro Umdrehung von Verdichterrad beziehungsweise Aufnahmerad ausbildbaren CO₂-Pellets.

Vorteilhaft ist es, wenn das Verdichterrad eine Verdichterradhülse mit einer Verdichterradhülsenwand umfasst und wenn die Verdichtungselemente auf einer Außenseite der Verdichterradhülse angeordnet oder ausgebildet sind. Auf diese Weise kann der Zahnradverdichter besonders leicht, also mit geringem Gewicht, ausgebildet werden. Zudem kann ein von der Verdichterradhülse definierter Innenraum zur Aufnahme der hergestellten CO₂-Pellets dienen.

Günstig ist es, wenn das Aufnahmerad eine Aufnahmeradhülse mit einer Aufnahmeradhülsenwand umfasst und wenn die Schneeaufnahmen in der Aufnahmeradhülsenwand angeordnet oder ausgebildet sind. So lässt sich auf einfache Weise eine kontinuierlich betreibbare Hauptverdichtungseinrichtung ausbilden.

Für einen einfachen, automatischen Betrieb der Vorrichtung ist es günstig, wenn sie eine Antriebseinrichtung zum Antreiben des mindestens einen Verdichterrads und/oder des mindestens einen Aufnahmerads aufweist. Durch die Antriebseinrichtung können das mindestens eine Verdichterrad und/oder das mindestens eine Aufnahmerad angetrieben werden und optional auch CO₂-Schnee zwischen dieselben fördern. Die Antriebseinrichtung kann insbesondere als externer Synchronantrieb ausgebildet werden, der sowohl das Verdichterrad als auch das Aufnahmerad antreibt, und zwar derart, dass die zusammenwirkenden Verdichtungselemente und Schneeaufnahmen einander nicht berühren, also ein möglichst definierter Spalt zwischen diesen ausgebildet wird.

Günstig ist es, wenn die Vorrichtung eine Abstreifeinrichtung zum Abstreifen der ausgebildeten CO₂-Pellets von dem mindestens einen Verdichterrad und/oder von dem mindestens einen Aufnahmerad umfasst. Insbesondere kann die Abstreifeinrichtung derart angeordnet oder ausgebildet sein, dass beispielsweise durch die Verdichtungseinrichtung ausgebildete CO₂-Stränge abgetrennt werden zur Ausbildung im Wesentlichen gleichlanger CO₂-Pellets.

Vorteilhaft ist es, wenn die Abstreifeinrichtung mindestens ein Abstreifelement umfasst, welches in einem von der Verdichterradhülse definierten Verdichterradhülseninnenraum oder in einem von der Aufnahmeradhülse definierten Aufnahmeradhülseninnenraum angeordnet oder ausgebildet ist oder in diese mindestens teilweise hineinragt. Diese Ausgestaltung ermöglicht es insbesondere, mit dem mindestens einen Abstreifelement durch die Verdichterradhülse beziehungsweise die Aufnahmeradhülse hindurch extrudierte CO₂-Pellets durch Abstreifen eines extrudierten CO₂-Strangs auszubilden. Insbesondere kann das mindestens eine Abstreifelement rotierbar angeordnet oder ausgebildet sein, beispielsweise um eine Längsachse, welche parallel oder im Wesentlichen parallel zu einer Längsachse des Verdichterrads oder des Aufnahmerads verläuft.

Günstig ist es, wenn das mindestens eine Abstreifelement eine Abstreifkante umfasst, welche eine den Verdichterradhülseninnenraum begrenzende Verdichterradhülseninnenfläche der Verdichterradhülse berührt oder nahezu berührt oder eine den Aufnahmeradhülseninnenraum begrenzende Aufnahmeradhülseninnenfläche der Aufnahmeradhülse berührt oder nahezu berührt. Mit einer solchen Abstreifkante können CO₂-Pellets, die beispielsweise durch eine Durchbrechung der Verdichterradhülse oder der Aufnahmeradhülse hindurch extrudiert werden, auf einfache und sichere Weise abgestreift werden. Je nach Positionierung des Abstreifelements beziehungsweise der Abstreifkante desselben kann so die Länge der herzustellenden CO₂-Pellets eingestellt werden.

Vorteilhaft ist es, wenn die Hauptverdichtungseinrichtung einen Pelletauslass zum Abgeben von CO₂-Pellets aufweist. Dieser kann insbesondere parallel zur ersten oder zweiten Drehachse ausgerichtet sein oder quer, insbesondere senkrecht, zur ersten oder zweiten Drehachse verlaufen. Die erstgenannte Ausrichtung des Pelletauslasses ist insbesondere dann vorteilhaft, wenn die Vorrichtung eine Extrudiereinrichtung umfasst. Werden die CO₂-Pellets durch das mindestens eine Verdichterrad und das mit diesem zusammenwirkende mindestens eine Aufnahmerad ausgebildet, ist die Anordnung beziehungsweise Ausrichtung des Pelletauslasses quer zur ersten oder zweiten Drehachse besonders günstig.

Vorzugsweise ist der Pelletauslass in Schwerkraftrichtung unterhalb der Hauptverdichtungseinrichtung angeordnet oder ausgebildet. So können hergestellte CO₂-Pellets allein aufgrund der wirkenden Schwerkraft aus der Hauptverdichtungseinrichtung austreten.

Günstig ist es, wenn der Pelletauslass mit einem Zwischenspeicher zum Zwischenspeichern erzeugter CO₂-Pellets in fluidwirksamer Verbindung steht. Der Zwischenspeicher ermöglicht es insbesondere, sowohl bei einem diskontinuierlichen Herstellungsvorgang der CO₂-Pellets als auch bei einem diskontinuierlichen Strahlvorgang mit den CO₂-Pellets stets genügend CO₂-Pellets verfügbar zu halten.

Gemäß einer weiteren bevorzugten Ausführungsform der Erfindung kann vorgesehen sein, dass der Pelletauslass oder der Zwischenspeicher mit einer Übergabeeinrichtung zum Übergeben erzeugter CO₂-Pellets in eine CO₂-Pellet-Beschleunigungseinrichtung zum Beschleunigen derselben in fluidwirksamer Verbindung steht. Die vorgeschlagene Ausgestaltung ermöglicht insbesondere einen kontinuierlichen Betrieb der Vorrichtung zum Erzeugen von CO₂-Pellets zum Einsatz in Verbindung mit einem Reinigungsgerät. Auch ein diskontinuierlicher Betrieb der Vorrichtung ist möglich, und zwar insbesondere dann, wenn ein Zwischenspeicher vorgesehen ist.

Günstig ist es, wenn die Vorrichtung eine Drucktrenneinrichtung zur Ausbildung einer Druckstufe zwischen der Expansionseinrichtung und dem Pelletauslass aufweist. Insbesondere ist es vorteilhaft, wenn die Drucktrenneinrichtung zwischen der Verdichtungseinrichtung und der Beschleunigungseinrichtung angeordnet oder ausgebildet ist. Beispielsweise können im Bereich der Drucktrenneinrichtung Drucke deutlich höher als Atmosphärendruck herrschen, um durch Expansion des Gases CO₂-Schnee auszubilden. Vorzugsweise herrscht am Pelletauslass Atmosphärendruck. So können die CO₂-Pellets beispielsweise ohne besondere Schwierigkeiten in einen Zwischenspeicher oder direkt in eine CO₂-Pellet-Beschleunigungseinrichtung übergeben werden. Um die Ausbildung zu hoher Drucke insbesondere in der Vorverdichtungseinrichtung zu vermeiden, kann optional an der Vorverdichtungseinrichtung, insbesondere an der Vorverdichtungskammer, ein Überdruckventil vorgesehen sein, welches einen maximalen in der Vorverdichtungskammer herrschenden Druck vorgibt.

Vorteilhaft ist es, wenn die Drucktrenneinrichtung mindestens ein gasdichtes oder im Wesentlichen gasdichtes Dichtelement umfasst und wenn das mindestens eine Dichtelement zwischen der Expansionseinrichtung und dem Pelletauslass angeordnet ist. Das Dichtelement kann insbesondere in Form einer Kunststoffdichtung ausgebildet sein, die am mindestens einen Verdichterrad und/oder am mindestens einen Aufnahmerad ausgebildet ist.

Besonders einfach ausbilden lässt sich die Drucktrenneinrichtung, wenn das mindestens eine Dichtelement aus CO₂-Schnee, insbesondere komprimiertem CO₂-Schnee, ausgebildet ist. Der zu CO₂-Pellets zu verarbeitende, vorverdichtete CO₂-Schnee übt auf diese Weise eine Doppelfunktion aus. Er dient nicht nur als Ausgangsmaterial zur Ausbildung hochfester CO₂-Pellets mit hoher Dichte, sondern dichtet auch insbesondere das mindestens eine Verdichterrad und das mindestens eine Aufnahmerad gegeneinander ab, sodass eine Drucktrennungeinrichtung zwischen der Expansionseinrichtung und dem Pelletauslass ausgebildet wird.

Vorzugsweise ist das mindestens eine Dichtelement zwischen dem mindestens einen Verdichterrad und dem mindestens einen Aufnahmerad angeordnet oder ausgebildet. So kann der Zahnradverdichter insbesondere dann, wenn das mindestens eine Dichtelement aus CO₂-Schnee ausgebildet ist, auch die Drucktrenneinrichtung bilden beziehungsweise einen Teil desselben.

Die eingangs gestellte Aufgabe wird ferner bei einem Reinigungsgerät der eingangs beschriebenen Art erfindungsgemäß dadurch gelöst, dass es eine der oben beschriebenen Vorrichtungen zur Herstellung von hochfesten CO₂-Pellets aus CO₂-Schnee umfasst. Mit einem solchen Reinigungsgerät ist es möglich, Oberflächen durch Bestrahlen mit einem Gemischstrom aus einem Druckgas, beispielsweise Druckluft, und CO₂-Pellets zu behandeln. Die dazu eingesetzten CO₂-Pellets hoher Dichte können direkt im beziehungsweise durch das Reinigungsgerät erzeugt werden. Dieses ermöglicht einen minimalen Einsatz an flüssigem CO₂ oder CO₂-Gas zur Herstellung von CO₂-Schnee als Ausgangsmaterial zur Ausbildung der CO₂-Pellets.

Vorteilhaft ist es, wenn das Reinigungsgerät einen CO₂-Anschluss zum Verbinden mit einer flüssiges CO₂ enthaltenden CO₂-Quelle oder eine flüssiges CO₂ enthaltende CO₂-Quelle umfasst. Diese Ausgestaltung ermöglicht es beispielsweise, die Vorrichtung in Verbindung mit einem mobilen Reinigungsgerät zu nutzen.

Günstigerweise umfasst das Reinigungsgerät einen Druckgasanschluss zum Verbinden mit einer Druckgaserzeugungseinrichtung oder eine Druckgaserzeugungseinrichtung. Je nachdem, ob das Gerät in einem Bereich zum Einsatz kommt, wo ein Druckgasanschluss zur Verfügung steht oder nicht, kann so auf die jeweils einfachste Weise Druckgas genutzt beziehungsweise erzeugt werden zur Ausbildung eines Gemischstroms aus Druckgas und CO₂-Pellets. Vorzugsweise umfasst das Reinigungsgerät eine Übergabeeinrichtung zum Übergeben der mit der Vorrichtung erzeugten hochfesten CO₂-Pellets in eine CO₂-Pellet-Beschleunigungseinrichtung zur Beschleunigung derselben. Beispielsweise können CO₂-Pellets aus der Hauptverdichtungseinrichtung oder einem Zwischenspeicher mittels der Übergabeeinrichtung derart weitergeleitet werden, dass sie vor der Übergabe in einen Druckgasstrom oder durch diesen beschleunigt werden zum Ausbilden eines Gemischstroms aus Druckgas und CO₂-Pellets.

Um einen möglichst guten Reinigungseffekt zu erhalten, ist es vorteilhaft, wenn die CO₂-Pellets mit einer hohen Geschwindigkeit auf die zu behandelnden Oberflächen auftreffen. Dazu ist es günstig, wenn das Reinigungsgerät eine CO₂-Pellet-Beschleunigungseinrichtung umfasst. Diese kann insbesondere eine mit dem Druckgasanschluss oder der Druckgaserzeugungseinrichtung in Fluidverbindung stehende Druckgasleitung umfassen. Wird Druckgas durch die Druckgasleitung geleitet, können in diese eingebrachte CO₂-Pellets auf einfache und definierte Weise beschleunigt werden. Eine Geschwindigkeit der CO₂-Pellets lässt sich insbesondere durch eine Strömungsgeschwindigkeit des Druckgases beziehungsweise den in der Druckgasleitung herrschenden Druck einstellen.

Vorteilhaft ist es, wenn die Übergabeeinrichtung und/oder die CO₂-Pellet-Beschleunigungseinrichtung mindestens eine Venturi-Düse umfassen. Die mindestens eine Venturi-Düse erzeugt einen Unterdruck, welcher insbesondere CO₂-Pellets in die Druckgasleitung hineinsaugen kann, wenn die Venturi-Düse mit der Druckgasleitung in Fluidverbindung steht beziehungsweise einen Teil derselben bildet.

Gemäß einer weiteren bevorzugten Ausführungsform der Erfindung kann vorgesehen sein, dass die Übergabeeinrichtung stromabwärts einen Strahlanschluss umfasst zum Verbinden mit einer Strahlleitung oder dass die Übergabeeinrichtung stromabwärts mit einer Strahlleitung in Fluidverbindung steht. So kann beispielsweise an das Reinigungsgerät eine Strahlleitung angeschlossen werden, um den Gemischstrom genau dort hinzuleiten, wo er benötigt wird.

Vorzugsweise ist an einem freien Ende der Strahlleitung eine Strahldüse angeordnet oder ausgebildet. So kann der Gemischstrom beispielsweise in definierter Weise gebündelt oder fokussiert werden, um Oberflächen sehr präzise zu behandeln, beispielsweise von Schmutz zu reinigen.

Vorteilhaft ist es, wenn das Reinigungsgerät einen CO₂-Pellet-Zwischenspeicher zum Zwischenspeichern der erzeugten CO₂-Pellets umfasst. So können die Herstellung und das Ausbringen der CO₂-Pellets beispielsweise mit der Strahldüse, vollständig getrennt voneinander werden. Insbesondere wird dadurch sowohl ein diskontinuierlicher Betrieb bei der Herstellung der CO₂-Pellets als auch ein diskontinuierlicher Betrieb beim Ausbringen der CO₂-Pellets durch die Strahlleitung beziehungswiese die Strahldüse möglich. Der CO₂-Pellet-Zwischenspeicher dient somit als Pufferspeicher.

Günstig ist es, wenn der CO₂-Pellet-Zwischenspeicher einerseits mit der Hauptverdichtungseinrichtung und andererseits mit der Übergabeeinrichtung direkt oder indirekt in Fluidverbindung steht. So kann auf einen umständlichen Transport der CO₂-Pellets im Wesentlichen verzichtet werden. Beispielsweise kann der CO₂-Pellet-Zwischenspeicher derart angeordnet sein, dass die CO₂-Pellets aus der Hauptverdichtungseinrichtung direkt in den CO₂-Pellet-Speicher hineinfallen durch einen Einlass des CO₂-Pellet-Zwischenspeichers und andererseits durch einen entsprechenden Auslass entnommen und insbesondere an die Übergabeeinrichtung direkt oder indirekt übergeben werden können.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung eines Reinigungsgeräts zum Bestrahlen von zu behandelnden Oberflächen mit einem Gemischstrom aus einem Druckgas und CO₂-Pellets;
- Figur 2:: eine weitere schematische Darstellung eines Reinigungsgeräts zum Bestrahlen von zu behandelnden Oberflächen mit einem Gemischstrom aus einem Druckgas und CO₂-Pellets;
- Figur 3:: eine schematische, teilweise durchbrochene perspektivische Darstellung einer Vorrichtung zur Erzeugung hochfester CO₂-Pellets umfassend eine Vorverdichtungseinrichtung und eine Hauptverdichtungseinrichtung;
- Figur 4:: eine weitere perspektivische, teilweise geschnittene Ansicht der Anordnung aus Figur 3;
- Figur 5:: eine schematische, teilweise geschnittene Darstellung eines Ausführungsbeispiels einer Expansionseinrichtung;
- Figur 6:: eine perspektivische, teilweise durchbrochene Ansicht eines zweiten Ausführungsbeispiels einer Expansionseinrichtung;
- Figur 7:: eine teilweise geschnittene Seitenansicht der Anordnung aus Figur 6; und
- Figur 8:: eine Längsschnittansicht der Anordnung aus Figur 6.

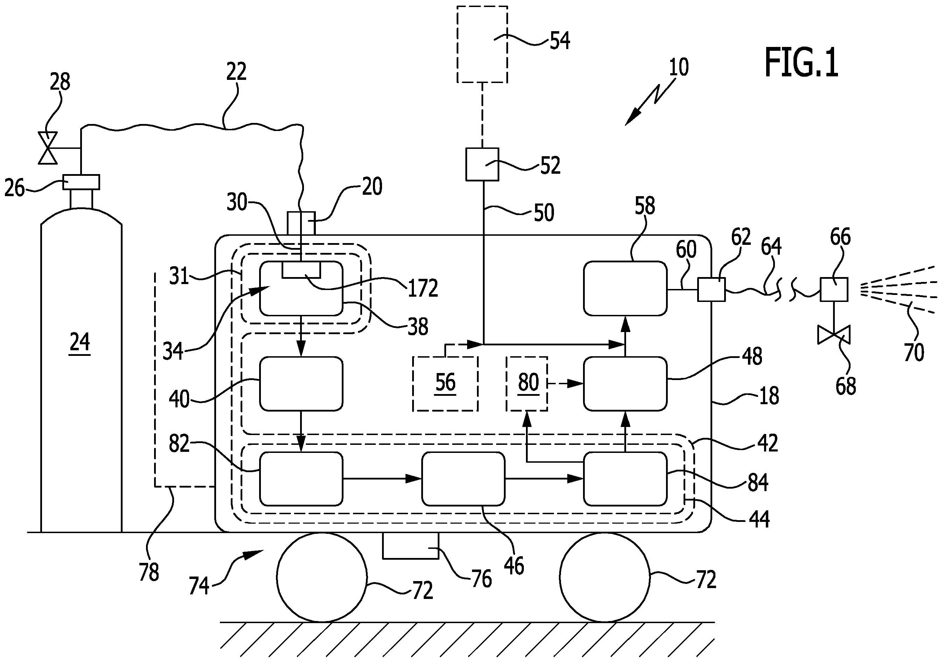

In Figur 1 ist schematisch ein insgesamt mit dem Bezugszeichen 10 bezeichnetes Reinigungsgerät zum Bestrahlen von zu behandelnden Oberflächen mit einem Gemischstrom 12 aus einem Druckgas 14 und CO₂-Pellets 16 dargestellt.

Das Reinigungsgerät 10 umfasst ein Gehäuse 18, an welchem ein CO₂-Anschluss 20 angeordnet ist, welcher über eine CO₂-Leitung 22 mit einem CO₂-Speicher 24, beispielsweise in Form einer CO₂-Druckgasflasche, verbunden ist. Diese kann insbesondere flüssiges CO₂ enthalten. Einem Auslass 26 des CO₂-Speichers nachgeschaltet ist eine mindestens ein Ventil umfassende Ventilanordnung 28, um flüssiges CO₂ aus dem CO₂-Speicher 24 durch die CO₂-Leitung 22 zu leiten.

Der CO₂-Anschluss 20 steht über eine Verbindungsleitung 30 mit einer Vorverdichtungseinrichtung 31 in Fluidverbindung. Die Vorverdichtungseinrichtung 31 umfasst eine Expansionseinrichtung 34 und eine mit dieser fluidwirksam in Verbindung stehenden Vorverdichtungskammer 38. Die Verbindungsleitung 30 steht mit einer Entspannungsdüse 32 der Expansionseinrichtung 34 in Fluidverbindung. Das flüssige CO₂ wird durch die Entspannungsdüse 172 expandiert und bildet CO₂-Schnee 36, welcher sich in der Vorverdichtungskammer 38 sammelt und durch Agglomeration vorverdichtet wird. Der CO₂-Schnee wird durch einen Strom aus CO₂-Gas und CO₂-Schnee 36 weiter gefördert.

Optional kann das Reinigungsgerät 10 ferner eine Abscheideeinrichtung 40 umfassen, um den hergestellten CO₂-Schnee 36 von nicht verfestigtem CO₂-Gas zu trennen.

Das Reinigungsgerät 10 umfasst ferner eine Vorrichtung 42 zur Herstellung von hochfesten CO₂-Pellets 16 aus CO₂-Schnee 36, die die Vorverdichtungseinrichtung 31 und eine Hauptverdichtungseinrichtung 44 zum Verdichten von CO₂-Schnee 36 zur Ausbildung von CO₂-Pellets 16 umfasst. Die Hauptverdichtungseinrichtung 44 ist in Form eines Zahnradverdichters 46 ausgebildet.

Die ausgebildeten CO₂-Pellets 16 werden an eine Übergabeeinrichtung 48 übergeben, welche über eine Druckgasleitung 50 mit einem Druckgasanschluss 52 in Fluidverbindung steht. Dieser kann mit einer externen Druckgasquelle 54 verbunden werden, die Druckgas, beispielsweise Druckluft bereitstellt. Optional kann das Reinigungsgerät 10 auch eine Druckgasquelle 56 umfassen, beispielsweise eine Druckluftflasche oder einen Kompressor zur Erzeugung von Druckluft mit einem gewünschten Druck.

Nach der Übergabeeinrichtung 48 wird ein Gemischstrom 12 gebildet durch das Druckgas und die darin eingebrachten CO₂-Pellets 16. Mit einer Beschleunigungseinrichtung 58 werden die CO₂-Pellets 16 durch das Druckgas im Gemischstrom 12 beschleunigt. Die Beschleunigungseinrichtung 58 ist über eine Leitung 60 mit einem stromabwärts angeordneten Strahlanschluss 62 in Fluidverbindung stehend. An den Strahlanschluss 62 kann optional eine Strahlleitung 64 angeschlossen werden oder dauerhaft angeschlossen sein. An einem freien Ende der Strahlleitung 64 ist optional eine Strahldüse 66 angeordnet, welche optional ein Ventil 68 umfassen kann zur Regelung der Form und/oder der Stärke eines aus der Strahldüse 66 austretenden Partikelstrahls 70, welcher die vom Druckgas bewegten CO₂-Pellets 16 umfasst.

Das Reinigungsgerät 10 kann optional fahrbar ausgebildet sein und ein mindestens drei Räder 72 umfassendes Fahrgestell 74 aufweisen. Optional kann das Reinigungsgerät 10 einen Antrieb 76 zum Antreiben mindestens eines Rads 72 aufweisen.

Ferner kann das Reinigungsgerät 10 eine Halteeinrichtung 78 zum Aufnehmen eines oder mehrerer CO₂-Speicher 24 aufweisen. Insgesamt kann das Reinigungsgerät 10 so ausgebildet werden, dass es völlig unabhängig von externen Strom- und CO₂-Versorgungen oder Druckgasquellen betrieben werden kann.

Optional kann zwischen der Hauptverdichtungseinrichtung 44 und der Übergabeeinrichtung 48 ein Zwischenspeicher 80 für CO₂-Pellets ausgebildet oder angeordnet sein.

Die Verdichtungseinrichtung 44 umfasst insbesondere auch eine Übergabeeinrichtung 82 zum Übergeben von vorverdichtetem CO₂-Schnee 36 von der - Vorverdichtungseinrichtung 31 beziehungsweise der Abscheideeinrichtung 40 an den Zahnradverdichter 46.

Optional kann die Hauptverdichtungseinrichtung 44 eine Extrudiereinrichtung 84 umfassen zum Extrudieren der CO₂-Pellets 16.

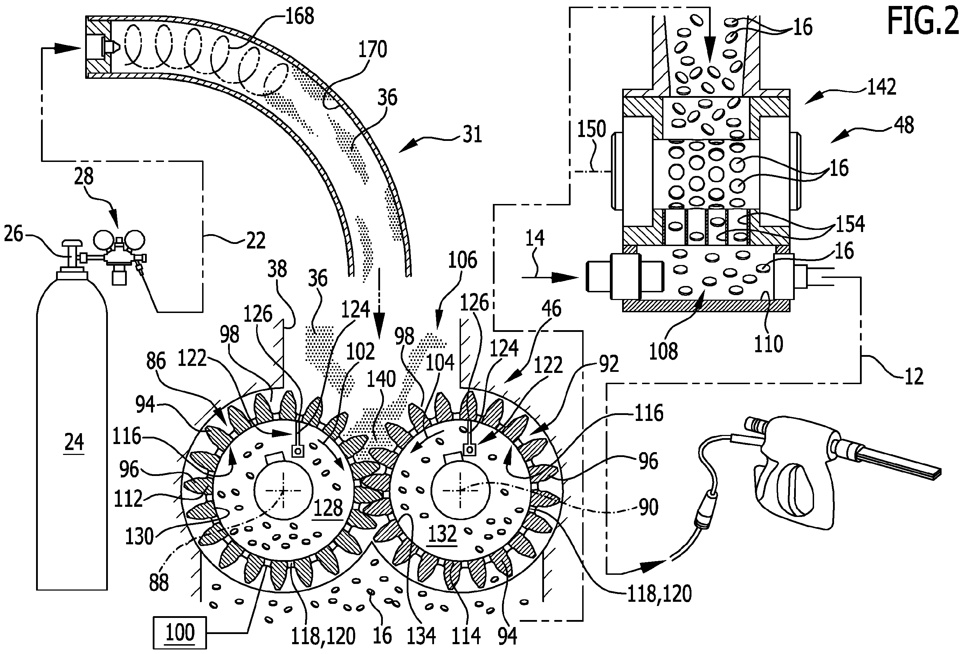

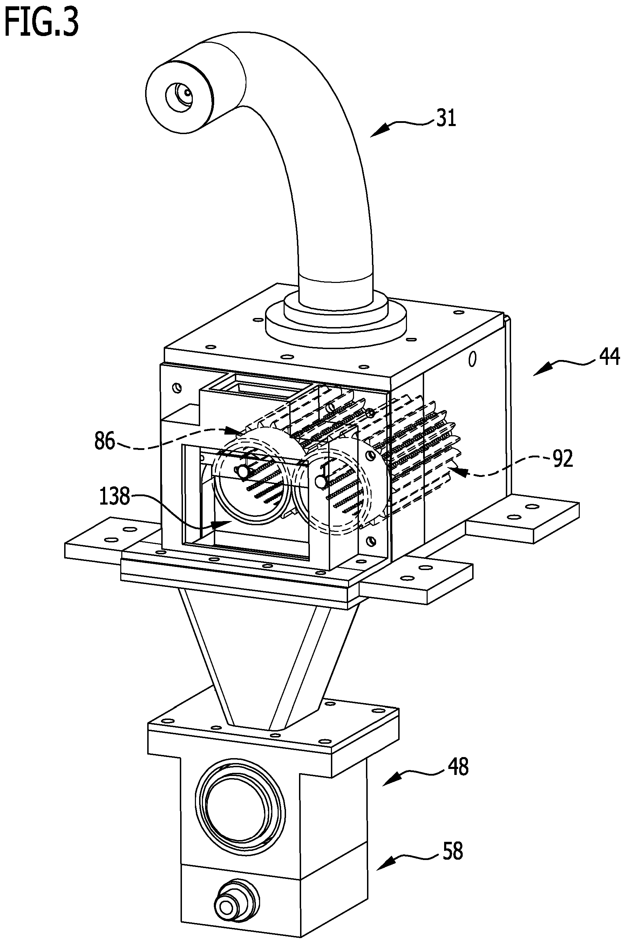

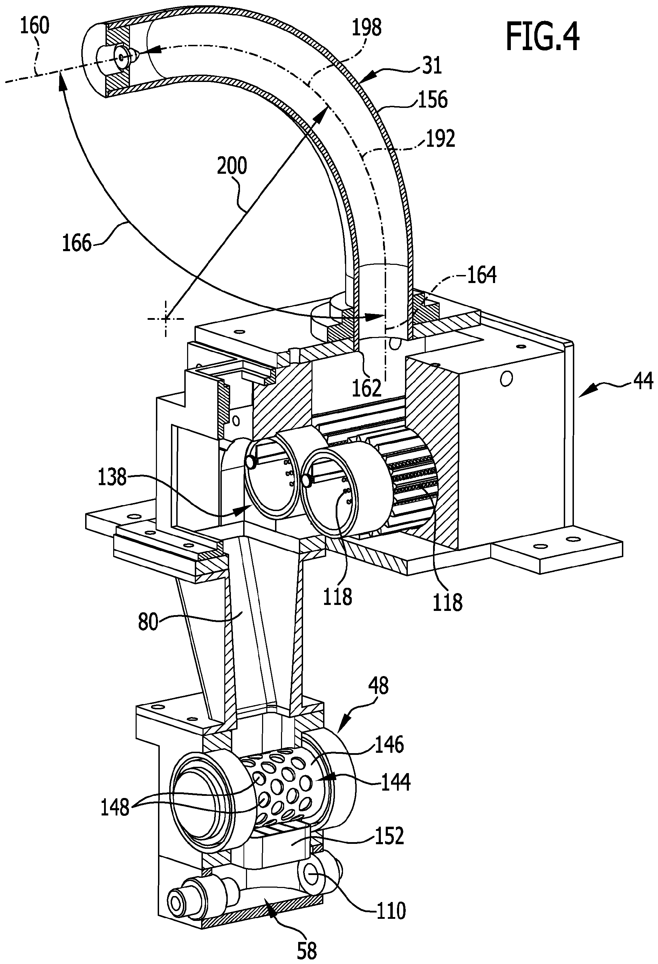

Die Funktionsweise der Vorrichtung 10, insbesondere von deren Vorverdichtungseinrichtung 31 und deren Hauptverdichtungseinrichtung 44 wird nachfolgend in Verbindung mit den Figuren 2 bis 5 näher erläutert.

Der Zahnradverdichter 46 umfasst ein um eine erste Drehachse 88 drehbar angeordnetes Verdichterrad 86 und ein um eine zweite Drehachse 90 drehbar angeordnetes Aufnahmerad 92. Das Verdichterrad 86 und das Aufnahmerad 92 sind im Wesentlichen identisch ausgebildet und weisen jeweils eine Mehrzahl von Zähnen 94 auf, die Vedichtungselemente 96 bilden. Zwischen den Zähnen 94 sind Schneeaufnahmen 98 ausgebildet.

Das Verdichterrad 86 und das Aufnahmerad 92 sind derart angeordnet, dass die erste Drehachse 88 und die zweite Drehachse 90 parallel zueinander verlaufen und die Zähne 94 in die Schneeaufnahmen 98 eingreifen, vorzugsweise ohne sie zu berühren. Ein Antrieb 100 dient zum in Drehung Versetzen des Verdichterrads 86 und/oder des Aufnahmerads 92. Das Verdichterrad 86 rotiert wie in Figur 2 schematisch dargestellt in Richtung des Pfeils 102, also im Uhrzeigersinn, das Aufnahmerad 92 rotiert in Richtung des Pfeils 104, also im Gegenuhrzeigersinn.

Die Zähne 94 des Verdichterrads 86 und des Aufnahmerads 92 nehmen CO₂-Schnee 36 aus dem Aufnahmebehälter 38 mit, wobei dann jeweils ein Zahn 94 den in einer Schneeaufnahme 98 aufgenommenen CO₂-Schnee 36 beim Ineinandergreifen der Zähne 94 in die Schneeaufnahmen 98 hinein komprimiert.

Das Verdichterrad 86 und das Aufnahmerad 92 sind nicht massiv ausgebildet, sondern umfassen eine Verdichterradhülse 112 beziehungsweise eine Aufnahmeradhülse 114, von denen jeweils in radialer Richtung von der jeweiligen Drehachse 88 beziehungsweise 90 weg weisend die Zähne 94 abstehen.

Der beispielhaft in Figur 2 dargestellte Zahnradverdichter 46 umfasst eine Extrudiereinrichtung 84. Diese umfasst zwei Extrusionsmatrizen 116, welche gebildet sind durch eine Mehrzahl von Durchbrechungen 118, die die Verdichterradhülse 112 beziehungsweise die Aufnahmeradhülse 114 durchsetzen. Die Durchbrechungen 118 sind in Form von in radialer Richtung von den Drehachsen 88 beziehungsweise 90 weg weisenden Bohrungen 120 ausgebildet. Bei dem in den Figuren 2 bis 4 dargestellten Verdichterrad 86 und dem Aufnahmerad 92 sind jeweils mehrere Durchbrechungen 118 nebeneinander in den Schneeaufnahmen 98 ausgebildet beziehungsweise münden in diese.

Die gegenläufig drehbar angeordneten und miteinander zusammenwirkenden Verdichterräder 86 und Aufnahmeräder 92 nehmen in den Schneeaufnahmen 98 CO₂-Schnee 36 aus dem Aufnahmebehälter 38 auf. Beim Zahnradverdichter 46 wird der vorverdichtete CO₂-Schnee 36 durch die Durchbrechungen 118 hindurch komprimiert, so dass hochfeste CO₂-Pellets 16 ausgebildet werden, und zwar durch Extrusion, nämlich durch die Aufnahmeradhülse 114 hindurch nach innen in einen Aufnahmeradhülseninnenraum 132 beziehungsweise durch die Verdichterradhülse 112 in einen Verdichterradhülseninnenraum 128 hinein.

Um CO₂-Pellets 16 konstanter Länge auszubilden, ist optional eine Abstreifeinrichtung 122 vorgesehen, die ein oder zwei Abstreifelemente 124 umfasst, die jeweils im inneren der Aufnahmeradhülse 114 beziehungsweise der Verdichterradhülse 112 angeordnet sein können. Die Abstreifelemente 124 weisen eine Abstreifkante 126 auf, welche eine den Verdichterradhülseninnenraum 128 begrenzende Verdichterradhülseinnenfläche 130 berührt oder nahezu berührt und/oder eine den Aufnahmeradhülseninnenraum 132 begrenzende Aufnahmeradhülseninnenfläche 134 berührt oder nahezu berührt. Die durch die Durchbrechungen 118 hindurch gepressten CO₂-Pellets 16 werden dadurch abgestreift. Die Abstreifelemente 124 sind an der Vorrichtung 42 feststehend angeordnet, rotieren also nicht mit dem Verdichterrad 86 beziehungsweise dem Aufnahmerad 92 mit.

Beim Zahnradverdichter 46 bilden die Verdichtungselemente 96 sowie die Schneeaufnahmen 98 zusammenwirkende Kolbenzylinderanordnungen, in denen vorverdichteter CO₂-Schnee 36 zu CO₂-Pellets 16 geformt wird.

Die komprimierten CO₂-Pellets treten jeweils einem offenen Ende der Verdichterradhülse 112 und der Aufnahmeradhülse 114 des Zahnradverdichter 46 - aus. Form und Größe der so erzeugten CO₂-Pellets 16 sind im Wesentlichen identisch und hängen im Wesentlichen davon ab, wie die Abstreifeinrichtung 122 ausgebildet und angeordnet ist.

Die erzeugten CO₂-Pellets 16 fallen in Schwerkraftrichtung nach unten in den Zwischenspeicher 80, der optional auch weggelassen werden kann. Er kann unterschiedlich groß ausgebildet sein.

Der Zwischenspeicher 80 ist fluidwirksam mit der Übergabeeinrichtung 48 verbunden, welche wiederum an die Beschleunigungseinrichtung 58 angeschlossen ist, die eine Venturidüse 108 umfasst.

Die Übergabeeinrichtung 48 ist in Form einer Vereinzelungseinrichtung 142 ausgebildet, die als Walzendispenser 144 gestaltet ist. Dieser umfasst eine Walze 146, die mit einer Mehrzahl von Vertiefungen 148 auf einer äußeren Oberfläche versehen ist, die jeweils der Aufnahme eines einzelnen CO₂-Pellet dienen. Die Walze 146 ist seitlich beidseits durch an die äußere Oberfläche angepasste Wandbereiche der Übergabeeinrichtung 48 verschlossen, so dass von oben CO₂-Pellets von der Walze 146 aufgenommen und in Schwerkraftrichtung unten wieder abgegeben werden können.

Aus dem Zwischenspeicher 80 fallen in Schwerkraftrichtung die CO₂-Pellets 16 auf die Walze 116. Diese dreht sich um ihre Längsachse 150 mittels eines nicht näher dargestellten Antriebs und fördert so CO₂-Pellets 16 in definierter Weise zur Beschleunigungseinrichtung 58. Die Vereinzelungseinrichtung 142 umfasst ferner einen der Walze 146 nachgeschalteten Gitterschacht 152 mit einer Mehrzahl von Durchbrechungen 154, um möglichst eine Agglomeration von den hochverdichteten CO₂-Pellets 16 vor dem Eintreten in die Beschleunigungseinrichtung 58 zu verhindern.

Im Bereich der Venturidüse 108 kann sich insbesondere ein Querschnitt einer sich stromaufwärts an die Venturidüse 108 anschließenden Druckgasleitung 110 verjüngen, so dass im Bereich der Verbindung zwischen dem Zwischenspeicher 80 und der Venturidüse 108 ein Unterdruck entsteht. Auf diese Weise wird die Übergabeeinrichtung 82 definiert, die CO₂-Pellets 16 in die Druckgasleitung hinein saugt. Die Venturidüse 108 bildet auch einen Teil der Beschleunigungseinrichtung 58, die die im Wesentlichen ruhenden CO₂-Pellets 16 aus dem Zwischenspeicher 80 auf im Wesentlichen eine Geschwindigkeit des in der Druckgasleitung 110 strömenden Druckgases 14 beschleunigt. Stromabwärts der Venturidüse 108 strömt dann der Gemischstrom 12 aus CO₂-Pellets 16 und Druckgas 14 durch die Leitung 60 zum Strahlanschluss 62.

Zwischen dem Aufnahmebehälter 38 und dem Zwischenspeicher 80 ist vorzugsweise eine Drucktrenneinrichtung 106 ausgebildet. Sie dient zur Ausbildung einer Druckstufe zwischen der Vorverdichtungseinrichtung 31 und einem Pelletauslass 138. Die Drucktrenneinrichtung 106 umfasst mindestens ein gasdichtes oder im Wesentlichen gasdichtes Dichtelement 140, welches zwischen der Expansionseinrichtung 34 und dem Pelletauslass 138 angeordnet ist. Vorzugsweise ist das mindestens eine Dichtelement 140 aus CO₂-Schnee 36 ausgebildet, insbesondere aus vorverdichtetem CO₂-Schnee 36. Wie in den Figuren 2 bis 4 schematisch dargestellt, ist das mindestens eine Dichtelement 140 zwischen dem mindestens einen Verdichterrad 86 und dem mindestens einen Aufnahmerad 92 angeordnet oder ausgebildet.

Nachfolgend soll die Vorverdichtungseinrichtung 31 näher beschrieben und ihre Funktion erläutert werden.

Die Vorverdichtungseinrichtung 31 umfasst die Expansionseinrichtung 34 zum Erzeugen von CO₂-Schnee 36 aus flüssigem oder gasförmigem CO₂ sowie die Vorverdichtungskammer 38. Die Vorverdichtungseinrichtung 31 ist in Form einer strömungsmechanischen Vorverdichtungseinrichtung 31 ausgebildet.

Die Vorverdichtungskammer 38 und die Expansionseinrichtung 34 sind fluidwirksam miteinander verbunden.

Die Vorverdichtungskammer 38 ist in Form eines Rohrs 156 ausgebildet. In den Figuren 2 bis 5 ist ein gekrümmtes Rohr 38 beispielhaft dargestellt, welches einen Einlass 158, welcher eine Einlasslängsachse 160 definiert, und einen Auslass 162 aufweist, welcher eine Auslasslängsachse 164 definiert. Die Einlasslängsachse 160 und die Auslasslängsachse 164 schließen zwischen sich einen Kammerwinkel 166 ein, welcher in einem Bereich von 0° bis 180° liegen kann. Bevorzugt liegt der Kammerwinkel 166 in einem Bereich von etwa 45° bis etwa 135°. Bei den in den Figuren beispielhaft dargestellten Ausführungsbeispielen beträgt er etwa 90°.

Die Vorverdichtungseinrichtung 31 ist ausgebildet zum Erzeugen eines gasförmigen CO₂-Stroms 168, welcher mindestens teilweise auf eine Innenwandfläche 170 der Vorverdichtungskammer 38 ausgerichtet ist. Dieser kann insbesondere spiralförmig oder im Wesentlichen spiralförmig die Vorverdichtungskammer 38 durchströmen, wodurch insbesondere eine fluidmechanische Eigenschaft der Vorverdichtungseinrichtung 31 erreicht wird.

Zum Entspannen von flüssigem oder gasförmigem CO₂ dient eine Entspannungsdüse 172 der Expansionseinrichtung 34. Die Entspannungsdüse 172 sitzt mit ihrem Düsenkörper 174 in einer Bohrung 176 eines Verschlusselements 178. Die Bohrung 176 ist koaxial zur Einlasslängsachse 160 ausgerichtet. Das Verschlusselement 178 verschließt ein erstes Ende 180 des Rohrs 156. Ein Sackloch 182, welches von einem Innenraum 184 der Vorverdichtungskammer 38 weg weisend geöffnet und koaxial zur Bohrung 176 ausgerichtet ist, definiert den Einlass 158, der beispielsweise mit der Verbindungsleitung 30 fluidwirksam verbunden ist.

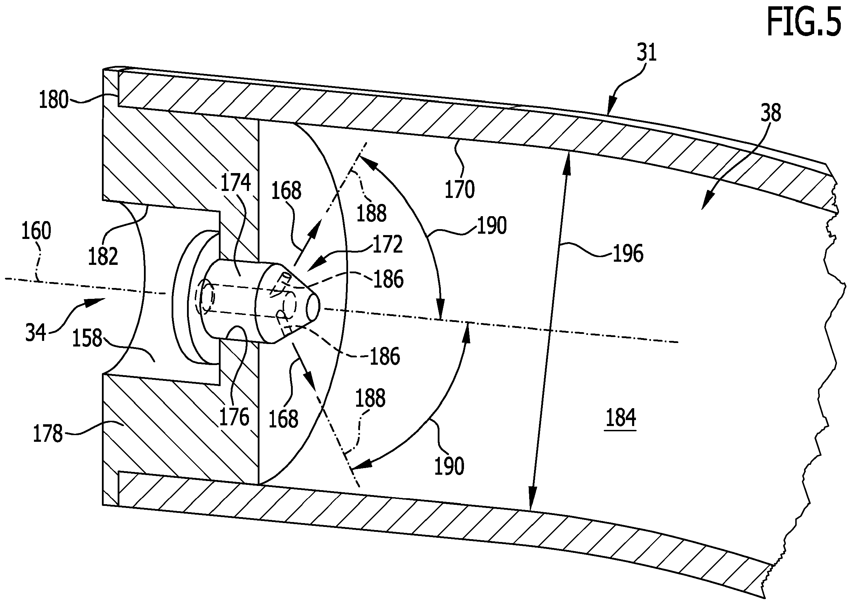

Die Entspannungsdüse 172 weist zwei Düsenaustrittsöffnungen 186 auf, die jeweils eine Düsenaustrittslängsachse 188 definieren. Alternativ können auch nur eine Düsenaustrittsöffnung 186 oder drei oder mehr Düsenaustrittsöffnungen 186 vorgesehen sein. Die Düsenaustrittslängsachsen 188 und die Einlasslängsachse 160 definieren zwischen sich jeweils einen Einlasswinkel 190. Der Einlasswinkel 190 liegt vorzugsweise in einem Bereich von etwa 0° bis etwa 90°. Insbesondere ist es vorteilhaft, wenn der Einlasswinkel 190 in einem Bereich von etwa 35° bis etwa 70° liegt. Ein Einlasswinkel 190 von 0° bedeutet also, dass die Düsenaustrittsöffnung 186 parallel, insbesondere koaxial zur Einlasslängsachse 160 ausgerichtet ist, ein Einlasswinkel 190 von 90° bedeutet, dass die Düsenaustrittslängsachse 188 senkrecht zur Einlasslängsachse 160 verläuft. In Figur 5 ist der Einlasswinkel 190 mit einem Wert von etwa 65° dargestellt.

Die Entspannungsdüse 172 ist derart angeordnet und ausgebildet, dass die Düsenaustrittsöffnungen 186 in den Innenraum 184 hinein münden.

Das Verschlusselement 178 ist dichtend in das Rohr 156 eingesetzt, die Entspannungsdüse 172 dichtend in die Bohrung 176 des Verschlusselements 178.

In Figur ist 4 schematisch eine Mittellinie 192 des gekrümmten Rohrs 156 eingezeichnet. Bei einem alternativ geradlinig verlaufenden Rohr 156 definierte die Mittellinie 192 dann die Längsachse des Rohrs, die mit der Einlasslängsachse 160 sowie der Auslasslängsachse 164 zusammenfiele.

Die Figuren 2 bis 5 zeigen eine Entspannungsdüse 172 in Form einer Dralldüse 194. Bei dieser können sich insbesondere die Düsenaustrittslängsachse 188 und die Eingangslängsachse 160 schneiden oder windschief zueinander verlaufen.

Alternativ könnte die Düsenaustrittsöffnung 186 bei der Entspannungsdüse 172 in Verbindung mit einem gekrümmten Rohr 156 auch parallel oder koaxial zur Einlasslängsachse 160 ausgerichtet sein. Dies insbesondere deshalb, weil bei einem entsprechend stark gekrümmten Rohr 156 das in den Innenraum 184 hineinströmende CO₂ auf die Innenwandfläche 170 irgendwann auftreffen wird.

Bei der Dralldüse 194 ergibt sich ein im Wesentlichen spiralförmigen CO₂-Strom 168, wie schematisch in Figur 2 dargestellt. CO₂-Schnee 36 lagert sich bei einem solchen CO₂-Strom 168 an unterschiedlichen Stellen der Innenwandfläche 170 ab und wird durch nachfolgend auftreffenden CO₂-Schnee 36 vorverdichtet. Durch den CO₂-Strom 168 werden jedoch auch agglomerierte und vorverdichtete CO₂-Schnee-Ansammlungen wieder von der Innenwandfläche 170 abgelöst und gelangen so in Form von vorverdichtetem CO₂-Schnee 36 durch den Auslass 162 zur Hauptverdichtungseinrichtung 44.

Für besonders gute Ergebnisse bei der Vorverdichtung des mit der Expansionseinrichtung 34 erzeugten CO₂-Schnees 36 ist es günstig, wenn die Vorverdichtungskammer 38 einen Durchmesser und eine Länge 198 längs der Mittellinie 192 aufweist, und zwar mit einem Verhältnis zwischen der Länge 198 und dem Durchmesser 196, welches in einem Bereich von etwa 5:1 bis etwa 20:1 liegt. Vorzugsweise liegt das Verhältnis zwischen der Länge 198 und dem Durchmesser 196 in einem Bereich von etwa 6:1 bis etwa 13:1. Insbesondere kann das Verhältnis etwa 7,5:1 betragen.

Ferner ist es vorteilhaft, wenn die Vorverdichtungskammer 38 einen Krümmungsradius 200 bezogen auf die Mittellinie 192 aufweist und wenn ein Verhältnis zwischen dem Krümmungsradius 200 und dem Durchmesser 196 in einem Bereich von etwa 2:1 bis etwa 10:1 liegt. Insbesondere ist es vorteilhaft, wenn das Verhältnis zwischen dem Krümmungsradius 200 und dem Durchmesser 196 in einem Bereich von etwa 2:1 bis etwa 7:1 liegt. Vorzugsweise beträgt das Verhältnis etwa 2,4:1.

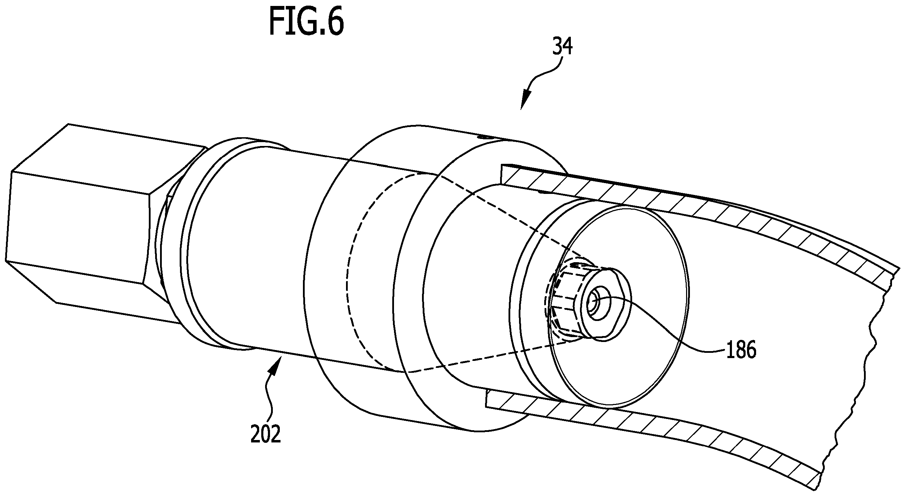

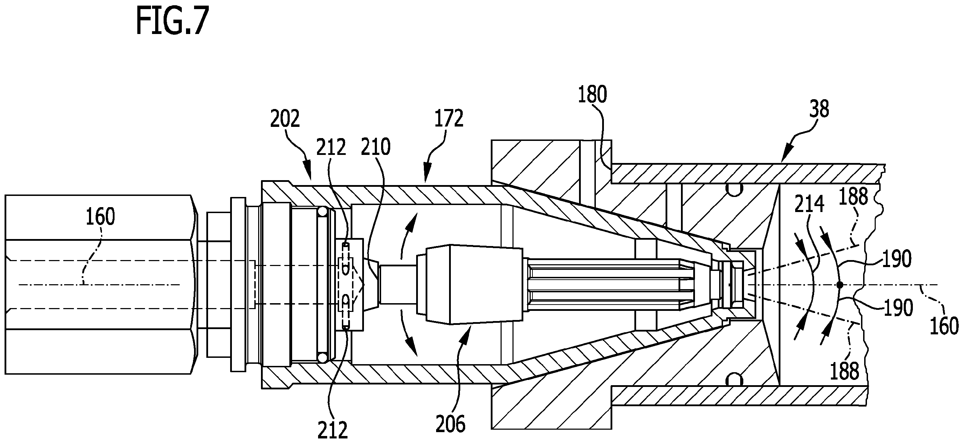

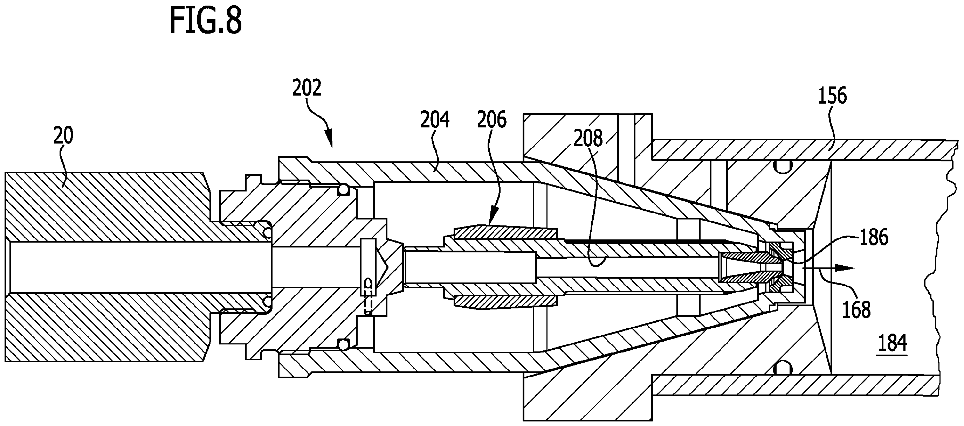

In den Figuren 6 bis 8 ist beispielhaft eine alternative Ausgestaltung der Entspannungseinrichtung 34 teilweise dargestellt. Statt der Dralldüse 104 ist eine Rotordüse 202 in das Ende 180 der Vorverdichtungskammer 38 fluiddicht eingesetzt.

Als Entspannungsdüse 172 eine Rotordüse 202 einzusetzen hat insbesondere den Vorteil, dass die Vorverdichtungskammer 38 ohne Weiteres auch als gerades Rohr 156 ausgebildet werden kann.

Eine Rotordüse, wie sie beispielhaft in den Figuren 6 bis 8 als Rotordüse 202 dargestellt ist, wird insbesondere als sogenannter Dreckfräser zum Entfernen hartnäckiger Verunreinigungen durch Hochdruckreinigung eingesetzt. Allerdings werden sie dort in umgekehrter Bauweise eingesetzt.

Die Rotordüse 202 umfasst eine Düsenkammer 204, die sich zur Düsenaustrittsöffnung 186 hin verjüngt. Im Innern der Düsenkammer 204 ist ein - Düsenkörper 206 rotierbar gelagert, welcher einen Längskanal 208 aufweist, welcher sich im Querschnitt verjüngend in die Düsenaustrittsöffnung 186 mündet.

Ein der Düsenaustrittsöffnung 186 gegenüberliegendes Ende 210 des Düsenkörpers 206 ist frei beweglich und kann bezogen auf die Einlasslängsachse 160 seitlich ausgelenkt werden.

In die Düsenkammer 204 münden mehrere CO₂-Auslässe 212, die quer, insbesondere senkrecht, zur Einlasslängsachse 160 ausgerichtet sind. Durch das einströmende CO₂ in die Düsenkammer 204 wird der Düsenkörper 206 bezogen auf die Einlasslängsachse 160 ausgelenkt und rotiert um diese. Damit wird aber auch die Düsenaustrittsöffnung 186 relativ zur Einlasslängsachse 160 ausgelenkt, so dass ein Einlasswinkel 190 zwischen der Düsenaustrittslängsachse 188 und der Einlasslängsachse 160 definiert wird. Insgesamt wird so ein Kegelwinkel 214 des in den Innenraum 184 einströmenden CO₂-Stroms 168 definiert, welcher dem doppelten Einlasswinkel 190 entspricht.

Die Vorrichtung 42 kann im Übrigen wie oben beschrieben ausgebildet sein. Grundsätzlich lassen sich also die Dralldüse 194 und die Rotordüse 202 beliebig austauschen.

Die Durchbrechungen 118 sowie alle anderen Kanten der Vorrichtung 42, die mit CO₂-Schnee 36 in Kontakt kommen können, sind vorzugsweise versenkt oder abgerundet ausgebildet. Auf diese Weise lässt sich die Ausbildung von Schneebrücken verhindern.

Die Vorrichtung 42 ist insgesamt gegenüber einer Umgebung vollständig abgedichtet. Dadurch lässt sich die Bildung von Wassereis im Innern der Vorrichtung 42 verhindern.

In den Figuren nicht dargestellt ist eine optionale Sicherungseinrichtung, die ein Überdruckventil umfasst, um einen Druckausgleich insbesondere zwischen dem Innenraum 184 und einer Umgebung der Vorrichtung 42 zu ermöglichen, wenn der durch die Entspannung von flüssigem CO₂ im Innenraum 184 herrschende Druck einen vorgegebenen Grenzwert übersteigt.

Das Reinigungsgerät 10, insbesondere die Vorrichtung 42, können optional getaktet betrieben werden. Hierzu kann insbesondere ein nicht näher dargestelltes Ventil, das als Magnetventil ausgebildet und in der CO₂-Leitung 22 angeordnet sein kann, eingesetzt werden, um eine Menge des erzeugten CO₂-Schnees 36 einzustellen. So werden vorzugsweise zu Beginn eines Betriebs der Vorrichtung 42 zum Herunterkühlen desselben nur geringe Mengen von CO₂-Schnee 36 erzeugt. Später kann dann eine anwendungsspezifische Einstellung einer Schneemenge vorgenommen werden, insbesondere abhängig davon, ob eine geringe oder eine hohe Abrasivität des Partikelstrahls 70 gewünscht wird.

Optional kann an der Vorrichtung 42 eine manuelle oder vollautomatische Rückspüleinrichtung vorgesehen sein, welche einen Druckluftanschluss umfasst zum Verbinden mit einer Druckluftquelle. So kann die Vorrichtung 42 mit Druckluft durchgeblasen werden. Insbesondere kann die Rückspüleinrichtung derart angeordnet sein, dass ein Anhaften von CO₂-Pellets 16 in der Übergabeeinrichtung 48 sowie im Zwischenspeicher 80 verhindert wird.

Ferner kann die Walze 146 des Walzendispensers 144 optional getaktet gedreht werden, also nicht mit einer gleichförmigen Rotationsgeschwindigkeit. Auf diese Weise lässt sich besonders einfach ein getakteter Betrieb beim Beaufschlagen einer zu reinigenden Fläche mit den hochfesten CO₂-Pellets 16 einstellen, denn die CO₂-Pellets 16 werden dann intermittierend von der Übergabeeinrichtung 48 abgegeben.

Mit dem Reinigungsgerät 10 ist es in der beschriebenen Weise möglich, Oberflächen mit dem Gemischstrom 12 aus Druckgas 14 und hochverdichteten CO₂-Pellets 16 wirkungsvoll zu reinigen. Die CO₂-Pellets 16 sublimieren nach der Anwendung und müssen nicht gesondert entsorgt werden.

### Bezugszeichenliste

- 10: Reinigungsgerät
- 12: Gemischstrom
- 14: Druckgas
- 16: CO₂-Pellet
- 18: Gehäuse
- 20: CO₂-Anschluss
- 22: CO₂-Leitung
- 24: CO₂-Speicher
- 26: Auslass
- 28: Ventilanordnung
- 30: Verbindungsleitung
- 31: Vorverdichtungseinrichtung
- 34: Expansionseinrichtung
- 36: CO₂-Schnee
- 38: Vorverdichtungskammer
- 40: Abscheideeinrichtung
- 42: Vorrichtung
- 44: Hauptverdichtungseinrichtung
- 46: Zahnradverdichter
- 48: Übergabeeinrichtung
- 50: Druckgasleitung
- 52: Druckgasanschluss
- 54: Druckgasquelle
- 56: Druckgasquelle
- 58: Beschleunigungseinrichtung
- 60: Leitung
- 62: Strahlanschluss
- 64: Strahlleitung
- 66: Strahldüse
- 68: Ventil
- 70: Partikelstrahl
- 72: Rad
- 74: Fahrgestell
- 76: Antrieb
- 78: Halteeinrichtung
- 80: Zwischenspeicher
- 82: Übergabeeinrichtung
- 84: Extrudiereinrichtung
- 86: Verdichterrad
- 88: erste Drehachse
- 90: zweite Drehachse
- 92: Aufnahmerad
- 94: Zahn
- 96: Verdichtungselement
- 98: Schneeaufnahme
- 100: Antrieb
- 102: Pfeil
- 104: Pfeil
- 106: Drucktrenneinrichtung
- 108: Venturi-Düse
- 110: Druckgasleitung
- 112: Verdichterradhülse
- 114: Aufnahmeradhülse
- 116: Extrusionsmatrize
- 118: Durchbrechung
- 120: Bohrung
- 122: Abstreifeinrichtung
- 124: Abstreifelement
- 126: Abstreifkante
- 128: Verdichterradhülseninnenraum
- 130: Verdichterradhülseninnenfläche
- 132: Aufnahmeradhülseninnenraum
- 134: Aufnahmeradhülseninnenfläche
- 138: Pelletauslass
- 140: Dichtelement
- 142: Vereinzelungseinrichtung
- 144: Walzendispenser
- 146: Walze
- 148: Vertiefung
- 150: Längsachse
- 152: Gitterschacht
- 154: Durchbrechung
- 156: Rohr
- 158: Einlass
- 160: Einlasslängsachse
- 162: Auslass
- 164: Auslasslängsachse
- 166: Kammerwinkel
- 168: CO₂-Strom
- 170: Innenwandfläche
- 172: Entspannungsdüse
- 174: Düsenkörper
- 176: Bohrung
- 178: Verschlusselement
- 180: Ende
- 182: Sackloch
- 184: Innenraum
- 186: Düsenaustrittsöffnung
- 188: Düsenaustrittslängsachse
- 190: Einlasswinkel
- 192: Mittellinie
- 194: Dralldüse
- 196: Durchmesser
- 198: Länge
- 200: Krümmungsradius
- 202: Rotordüse
- 204: Düsenkammer
- 206: Düsenkörper
- 208: Längskanal
- 210: Ende
- 212: CO₂-Auslass
- 214: Kegelwinkel

## Patentansprüche

1. Vorrichtung (42) zur Herstellung von hochfesten CO₂-Pellets (16) aus CO₂-Schnee (36), insbesondere für ein Reinigungsgerät (10) zum Bestrahlen von zu behandelnden Oberflächen mit einem Gemischstrom (12) aus einem Druckgas (14) und CO₂-Pellets (16), umfassend eine Hauptverdichtungseinrichtung (44) zum Verdichten von CO₂-Schnee (36) zur Ausbildung von CO₂-Pellets (16) und eine Vorverdichtungseinrichtung (31) zum Vorverdichten von durch Entspannen von flüssigem CO₂ erzeugten CO₂-Schnees (36), **dadurch gekennzeichnet, dass** die Vorverdichtungseinrichtung (31) in Form einer strömungsmechanischen Vorverdichtungseinrichtung (31) ausgebildet ist, dass die Vorverdichtungseinrichtung (31) eine Expansionseinrichtung (34) zum Erzeugen von CO₂-Schnee (36) aus flüssigem oder gasförmigem CO₂ und eine Vorverdichtungskammer (38) zum Aufnehmen und Vorverdichten des erzeugten CO₂-Schnees (36) umfasst und dass die Expansionseinrichtung (34) und die Vorverdichtungskammer (38) miteinander fluidwirksam verbunden sind.

2. Vorrichtung nach Anspruch 1, **dadurch gekennzeichnet, dass** die strömungsmechanische Vorverdichtungseinrichtung (31) ausgebildet ist zum Erzeugen eines gasförmigen CO₂-Stroms in der Vorverdichtungskammer (38), welcher mindestens teilweise auf eine Innenwandfläche (170) der Vorverdichtungskammer (38) ausgerichtet ist,
wobei insbesondere die strömungsmechanische Vorverdichtungseinrichtung (38) ausgebildet ist zum Erzeugen eines spiralförmigen oder im Wesentlichen spiralförmigen gasförmigen CO₂-Stroms (168) in der Vorverdichtungskammer (38).

3. Vorrichtung nach einem der voranstehenden Ansprüche, **dadurch gekennzeichnet, dass** die Expansionseinrichtung (34) eine Entspannungsdüse (172) zum Entspannen von flüssigem oder gasförmigem CO₂ umfasst.

4. Vorrichtung nach Anspruch 3, **dadurch gekennzeichnet, dass**
a) die Entspannungsdüse (172) angeordnet und ausgebildet ist zum Abgeben von flüssigem CO₂ in die Vorverdichtungskammer (38) hinein
und/oder
b) die Vorverdichtungskammer (38) einen eine Einlasslängsachse (160) definierenden Einlass (158) aufweist, dass die Entspannungsdüse (172) mindestens eine Düsenaustrittsöffnung (186) aufweist, dass die mindestens eine Düsenaustrittsöffnung (186) eine Düsenaustrittslängsachse (188) definiert und dass die Einlasslängsachse (160) und die Düsenaustrittslängsachse (188) zwischen sich einen Einlasswinkel (190) definieren, welcher in einem Bereich von etwa 0° bis etwa 90° liegt, insbesondere in einem Bereich von etwa 35° bis etwa 70°,
wobei weiter insbesondere die Düsenaustrittslängsachse (188) und die Einlasslängsachse (160) einander schneiden oder windschief zueinander oder parallel zueinander verlaufen,
und/oder
c) die Entspannungsdüse (172) in Form einer Drall- oder Rotordüse (194; 202) ausgebildet ist.

5. Vorrichtung nach einem der voranstehenden Ansprüche, **dadurch gekennzeichnet, dass** die Vorverdichtungskammer (38)
a) in Form eines Rohrs (156) ausgebildet ist
und/oder
b) eine Längsachse (192) definiert oder gekrümmt ausgebildet ist und/oder
c) einen eine Auslasslängsachse (164) definierenden Auslass (162) aufweist,
wobei die Auslasslängsachse (164) und die Einlasslängsachse (160) zwischen sich einen Kammerwinkel (166) einschließen, welcher in einem Bereich von etwa 0° bis etwa 180° liegt, insbesondere in einem Bereich von etwa 45° bis etwa 135°, weiter bevorzugt beträgt der Kammerwinkel (166) etwa 90°,
und/oder
d) einen Durchmesser und eine Länge (198) aufweist und dass ein Verhältnis zwischen Länge (198) und Durchmesser (196) in einem Bereich von etwa 4:1 bis etwa 20:1 liegt, insbesondere in einem Bereich von etwa 6:1 bis etwa 14:1,
und/oder
e) einen Krümmungsradius (200) aufweist und dass ein Verhältnis zwischen Krümmungsradius (200) und Durchmesser (196) in einem Bereich von etwa 2:1 bis etwa 10:1 liegt, insbesondere in einem Bereich von etwa 2:1 bis etwa 6:1.

6. Vorrichtung nach einem der voranstehenden Ansprüche, **dadurch gekennzeichnet, dass**
a) die Vorverdichtungseinrichtung (31) eine mechanische Vorverdichtungseinheit umfasst mit mindestens einem bewegbar angeordneten Vorverdichtungselement zum Komprimieren des erzeugten CO₂-Schnees (36) in der Vorverdichtungskammer (38), wobei insbesondere das mindestens eine Vorverdichtungselement in Form eines Druckglieds, insbesondere in Form eines Stempels oder eines Kolbens, oder in Form einer Walze ausgebildet ist,
und/oder
b) die Vorverdichtungseinrichtung (31) einen CO₂-Anschluss (20) zum Verbinden mit einer flüssiges CO₂ enthaltenden CO₂-Quelle (24) umfasst,
wobei insbesondere der CO₂-Anschluss (20) in fluidwirksamer Verbindung mit der Entspannungseinrichtung (34) steht, und/oder
c) die Vorrichtung eine flüssiges CO₂ enthaltende CO₂-Quelle (24) umfasst, die mit der Vorverdichtungseinrichtung (31) fluidwirksam verbunden ist,
wobei insbesondere die CO₂-Quelle (24) ein flüssiges CO₂ enthaltender Druckbehälter ist und/oder die flüssige CO₂-Quelle (24) über eine Verbindungsleitung (22) fluidwirksam mit der Vorverdichtungseinrichtung (31) verbunden ist.

7. Vorrichtung nach einem der voranstehenden Ansprüche, **dadurch gekennzeichnet, dass** die Hauptverdichtungseinrichtung (44) in Form einer Extrudiereinrichtung (84) ausgebildet ist,
wobei insbesondere die Extrudiereinrichtung (84) mindestens eine Extrusionsmatrize (116) mit einer Mehrzahl von Durchbrechungen (118) umfasst,
wobei weiter insbesondere jede der Mehrzahl von Durchbrechungen (118) eine Längsachse definiert, die sich in radialer oder im Wesentlichen in radialer Richtung von der ersten oder zweiten Drehachse (88, 90) weg erstreckt.

8. Vorrichtung nach Anspruch 7, **dadurch gekennzeichnet, dass** die Extrudiereinrichtung (84) in Form eines Zahnradverdichters (46) ausgebildet ist,
wobei insbesondere der Zahnradverdichter (46) mindestens ein um eine erste Drehachse (88) rotierbar gelagertes Verdichterrad (86) mit einer Mehrzahl von Verdichtungselementen (96) und mindestens ein mit dem mindestens einen Verdichterrad (86) zusammenwirkendes, um eine zweite Drehachse (90) rotierbar gelagertes Aufnahmerad (92) mit einer Mehrzahl von korrespondierend zu den Verdichtungselementen (96) ausgebildeten Schneeaufnahmen (98) zum Aufnehmen von CO₂-Schnee (36) umfasst,
wobei weiter insbesondere
a) die Mehrzahl von Verdichtungselementen (96) in Form von in radialer Richtung vom Verdichterrad (86) abstehenden Zähnen (94) ausgebildet ist und/oder dass die Mehrzahl von Schneeaufnahmen (98) in Form von in radialer Richtung geöffneter Vertiefungen ausgebildet ist
und/oder
b) das mindestens eine Verdichterrad (86) und das mindestens eine Aufnahmerad (92) identisch oder im Wesentlichen identisch ausgebildet sind
und/oder
c) die Mehrzahl von Schneeaufnahmen (98) in Form von Zwischenräumen ausgebildet ist, die zwischen der Mehrzahl von Verdichtungselementen (96) angeordnet oder ausgebildet sind
und/oder
d) jede Schneeaufnahme (98) mit mindestens einer Durchbrechung (118) in Fluidverbindung steht
und/oder
e) das Verdichterrad (86) eine Verdichterradhülse (112) mit einer Verdichterradhülsenwand umfasst und dass die Verdichtungselemente (96) auf einer Außenseite der Verdichterradhülse (112) angeordnet oder ausgebildet sind
und/oder
f) das Aufnahmerad (92) eine Aufnahmeradhülse (114) mit einer Aufnahmeradhülsenwand umfasst und dass die Schneeaufnahmen (98) in der Aufnahmeradhülsenwand angeordnet oder ausgebildet sind
und/oder
g) die Vorrichtung eine Antriebseinrichtung (100) zum Antreiben des mindestens einen Verdichterrads (86) und/oder des mindestens einen Aufnahmerads (92) umfasst.

9. Vorrichtung nach Anspruch 7, **dadurch gekennzeichnet, dass** die Extrudiereinrichtung (84) in Form eines Zahnradverdichters (46) ausgebildet ist, dass der Zahnradverdichter (46) mindestens ein um eine erste Drehachse (88) rotierbar gelagertes Verdichterrad (86) mit einer Mehrzahl von Verdichtungselementen (96) und mindestens ein mit dem mindestens einen Verdichterrad (86) zusammenwirkendes, um eine zweite Drehachse (90) rotierbar gelagertes Aufnahmerad (92) mit einer Mehrzahl von korrespondierend zu den Verdichtungselementen (96) ausgebildeten Schneeaufnahmen (98) zum Aufnehmen von CO₂-Schnee (36) umfasst und dass die Vorrichtung eine Abstreifeinrichtung (122) zum Abstreifen der ausgebildeten CO₂-Pellets (16) von dem mindestens einen Verdichterrad (86) und/oder von dem mindestens einen Aufnahmerad (92),
wobei insbesondere die Abstreifeinrichtung (122) mindestens ein Abstreifelement (124) umfasst, welches in einem von der Verdichterradhülse (112) definierten Verdichterradhülseninnenraum (128) oder in einem von der Aufnahmeradhülse (114) definierten Aufnahmeradhülseninnenraum (132) angeordnet oder ausgebildet ist oder in diese mindestens teilweise hineinragt,
wobei weiter insbesondere das mindestens eine Abstreifelement (124) eine Abstreifkante (126) umfasst, welche eine den Verdichterradhülseninnenraum (128) begrenzende Verdichterradhülseninnenfläche (130) der Verdichterradhülse (112) berührt oder nahezu berührt oder eine den Aufnahmeradhülseninnenraum (132) begrenzende Aufnahmeradhülseninnenfläche (134) der Aufnahmeradhülse (114) berührt oder nahezu berührt.

10. Vorrichtung nach einem der voranstehenden Ansprüche, **dadurch gekennzeichnet, dass** die Hauptverdichtungseinrichtung (44) einen Pelletauslass (138) zum Abgeben von CO₂-Pellets (16) aufweist.

11. Vorrichtung nach Anspruch 10, **dadurch gekennzeichnet, dass**
a) der Pelletauslass (138) in Schwerkraftrichtung unterhalb der Hauptverdichtungseinrichtung (44) angeordnet oder ausgebildet ist
und/oder
b) der Pelletauslass (138) mit einem Zwischenspeicher (80) zum Zwischenspeichern erzeugter CO₂-Pellets (16) in fluidwirksamer Verbindung steht,
wobei insbesondere der Pelletauslass (138) oder der Zwischenspeicher (80) mit einer Übergabeeinrichtung (48) zum Übergeben erzeugter CO₂-Pellets (16) in eine CO₂-Pellet-Beschleunigungseinrichtung (58) zum Beschleunigen derselben in fluidwirksamer Verbindung steht.

12. Vorrichtung nach einem der voranstehenden Ansprüche, **gekennzeichnet durch** eine Drucktrenneinrichtung (106) zur Ausbildung einer Druckstufe zwischen der Expansionseinrichtung (34) und dem Pelletauslass (138), wobei insbesondere die Drucktrenneinrichtung (106) mindestens ein gasdichtes oder im Wesentlichen gasdichtes Dichtelement (140) umfasst und dass das mindestens eine Dichtelement (140) zwischen der Expansionseinrichtung (34) und dem Pelletauslass (138) angeordnet ist, wobei weiter insbesondere
a) das mindestens eine Dichtelement (140) aus CO₂-Schnee (36), insbesondere komprimiertem CO₂-Schnee (36), ausgebildet ist
und/oder
b) das mindestens eine Dichtelement (140) zwischen dem mindestens einen Verdichterrad (86) und dem mindestens einen Aufnahmerad (92) angeordnet oder ausgebildet ist.

13. Reinigungsgerät (10) zum Bestrahlen von zu behandelnden Oberflächen mit einem Gemischstrom (12) aus einem Druckgas (14) und CO₂-Pellets (16), **gekennzeichnet durch** eine Vorrichtung (42) zur Herstellung von hochfesten CO₂-Pellets (16) aus CO₂-Schnee (36) nach einem der voranstehenden Ansprüche,
wobei insbesondere das Reinigungsgerät umfasst
a) einen CO₂-Anschluss (20) zum Verbinden mit einer flüssiges CO₂-enthaltenden CO₂-Quelle (24) oder durch eine flüssiges CO₂-enthaltende CO₂-Quelle (24)
und/oder
b) einen Druckgasanschluss (52) zum Verbinden mit einer Druckgaserzeugungseinrichtung (54) oder durch eine Druckgaserzeugungseinrichtung (56)
und/oder
c) eine Übergabeeinrichtung (48) zum Übergeben der CO₂-Pellets (16) in eine CO₂-Pellet-Beschleunigungseinrichtung (58) zum Beschleunigen derselben
und/oder
d) eine CO₂-Pellet-Beschleunigungseinrichtung (58), welche insbesondere eine mit dem Druckgasanschluss (52) oder der Druckgaserzeugungseinrichtung (54, 56) in Fluidverbindung stehende Druckgasleitung (50) umfasst.

14. Reinigungsgerät nach Anspruch 13, **dadurch gekennzeichnet, dass** es eine Übergabeeinrichtung (48) zum Übergeben der CO₂-Pellets (16) in eine CO₂-Pellet-Beschleunigungseinrichtung (58) zum Beschleunigen derselben und/oder eine CO₂-Pellet-Beschleunigungseinrichtung (58), welche insbesondere eine mit dem Druckgasanschluss (52) oder der Druckgaserzeugungseinrichtung (54, 56) in Fluidverbindung stehende Druckgasleitung (50) umfasst, und dass die Übergabeeinrichtung (48) und/oder die CO₂-Pellet-Beschleunigungseinrichtung (58) mindestens eine Venturi-Düse (108) umfasst,
wobei insbesondere die Übergabeeinrichtung (48) stromabwärts einen Strahlanschluss (62) umfasst zum Verbinden mit einer Strahlleitung (64) oder dass die Übergabeeinrichtung (48) stromabwärts mit einer Strahlleitung (64) fluidwirksam verbunden ist, wobei weiter insbesondere an einem freien Ende der Strahlleitung (64) eine Strahldüse (66) angeordnet oder ausgebildet ist.

15. Reinigungsgerät nach Anspruch 13 oder 14, **gekennzeichnet durch** einen CO₂-Pellet-Zwischenspeicher (80) zum Zwischenspeichern erzeugter CO₂--Pellets (16),
wobei insbesondere der CO₂-Pellet-Zwischenspeicher (80) einerseits mit der Hauptverdichtungseinrichtung (44) und andererseits mit der Übergabeeinrichtung (48) direkt oder indirekt in Fluidverbindung steht.

## Claims

1. Device (42) for producing high-strength CO₂ pellets (16) from CO₂ snow (36), in particular, for a cleaning device (10) for blasting surfaces to be treated with a mixed-flow (12) consisting of a compressed gas (14) and CO₂ pellets (16), comprising a main compressing device (44) for compressing CO₂ snow (36) for forming CO₂ pellets (16), and a pre-compressing device (31) for pre-compressing CO₂ snow (36) produced by expanding liquid CO₂, **characterized in that** the pre-compressing device (31) is in the form of a fluid-mechanical pre-compressing device (31), **in that** the pre-compressing device (31) comprises an expansion device (34) for producing CO₂ snow (36) from liquid or gaseous CO₂ and a pre-compression chamber (38) for receiving and pre-compressing the produced CO₂ snow (36) and **in that** the expansion device (34) and the pre-compression chamber (38) are connected to one another in fluidic manner.

2. Device in accordance with Claim 1, **characterized in that** the fluid-mechanical pre-compressing device (31) is formed for producing a gaseous CO₂ stream in the pre-compression chamber (38) which is directed at least partially onto an inner wall surface (170) of the pre-compression chamber (38),
wherein, in particular, the fluid-mechanical pre-compressing device (31) is formed for producing a helical or substantially helical gaseous CO₂ stream (168) in the pre-compression chamber (38).

3. Device in accordance any of the preceding Claims, **characterized in that** the expansion device (34) comprises an expanding nozzle (172) for expanding liquid or gaseous CO₂.

4. Device in accordance with Claim 3, **characterized in that**
a) the expanding nozzle (172) is arranged and formed for delivering liquid CO₂ into the pre-compression chamber (38)
and/or
b) the pre-compression chamber (38) comprises an inlet (158) defining an inlet longitudinal axis (160), **in that** the expanding nozzle (172) comprises at least one nozzle outlet opening (186), **in that** the at least one nozzle outlet opening (186) defines a nozzle outlet longitudinal axis (188) and **in that** the inlet longitudinal axis (160) and the nozzle outlet longitudinal axis (188) define between them an inlet angle (190) which lies in a range of approximately 0° to 90°, in particular, in a range of approximately 35° to 70°,
wherein, further in particular, the nozzle outlet longitudinal axis (188) and the inlet longitudinal axis (160) intersect one another or are skewed relative to each other or run parallel to each other,
and/or
c) the expanding nozzle (172) is in the form of a swirl or a rotor nozzle (194; 202).

5. Device in accordance with any of the preceding Claims, **characterized in that** the pre-compression chamber (38)
a) is in the form of a pipe (156)
and/or
b) defines a longitudinal axis (192) or is curved
and/or
c) comprises an outlet (162) defining an outlet longitudinal axis (164),
wherein, in particular, the outlet longitudinal axis (164) and the inlet longitudinal axis (160) include between them a chamber angle (166) which lies in a range of approximately 0° to approximately 180°, in particular, in a range of approximately 45° to 135°, and further preferred, the chamber angle (166) amounts to approximately 90°,
and/or
d) has a diameter and a length (198) and that a ratio between the length (198) and diameter (196) lies in a range of approximately 4:1 to approximately 20:1, in particular, in a range of approximately 6:1 to approximately 14:1,
and/or
e) has a radius of curvature (200) and **in that** a ratio between the radius of curvature (200) and the diameter (196) lies in a range of approximately 2:1 to approximately 10:1, in particular in a range of approximately 2:1 to approximately 6:1.

6. Device in accordance with any of the preceding Claims, **characterized in that**
a) the pre-compressing device (31) comprises a mechanical pre-compressing unit having at least one movable pre-compressing element for compressing the produced CO₂ snow (36) in the pre-compression chamber (38),
wherein, in particular, the at least one pre-compressing element is in the form of a pressure member, in particular, in the form of a stamp or a piston or in the form of a roller,
and/or
b) the pre-compressing device (31) comprises a CO₂ connector (20) for connecting to a source (24) of CO₂ containing liquid CO₂, wherein, in particular, the CO₂ connector (20) is connected in fluidic manner to the expansion device (34),
and/or
c) the device comprises a source (24) of CO₂ containing liquid CO₂ which is connected in fluidic manner to the pre-compressing device (31),
wherein, in particular, the source (24) of CO₂ is a pressurised container containing liquid CO₂ and/or the source (24) of liquid CO₂ is connected in fluidic manner to the pre-compressing device (31) by a feeder line (22).

7. Device in accordance with any of the preceding Claims, **characterized in that** the main compressing device (44) is in the form of an extruding device (84),
wherein, in particular, the extruding device (84) comprises at least one extrusion matrix (116) incorporating a plurality of apertures (118), wherein, further in particular, each of the plurality of apertures (118) defines a longitudinal axis which extends away from the first or second axis of rotation (88, 90) in the radial direction or substantially in the radial direction.

8. Device in accordance with Claim 7, **characterized in that** the extruding device (84) is in the form of a gear wheel compressor (46),
wherein, in particular, the gear wheel compressor (46) comprises at least one compressor wheel (86) having a plurality of compressing elements (96) that is mounted such as to be rotatable about a first axis of rotation (88), and at least one pick-up wheel (92) which is mounted such as to be rotatable about a second axis of rotation (90) and cooperates with the at least one compressor wheel (86) and which incorporates a plurality of snow pick-ups (98) for receiving CO₂ snow (36) that are formed in correspondence with the compressing elements (96),
wherein, further in particular,
a) the plurality of compressing elements (96) are in the form of teeth (94) projecting from the compressor wheel (86) in the radial direction and/or **in that** the plurality of snow pick-ups (98) are in the form of recesses which open in the radial direction
and/or
b) the at least one compressor wheel (86) and the at least one pick-up wheel (92) are formed such as to be identical or substantially identical
and/or
c) the plurality of snow pick-ups (98) are in the form of gaps which are arranged or formed between the plurality of compressing elements (96)
and/or
d) each snow pick-up (98) is connected in fluidic manner to at least one aperture (118)
and/or
e) the compressor wheel (86) comprises a compressor wheel sleeve (112) having a compressor wheel sleeve wall and **in that** the compressing elements (96) are arranged or formed on an outer surface of the compressor wheel sleeve (112)
and/or
f) the pick-up wheel (92) comprises a pick-up wheel sleeve (114) having a pick-up wheel sleeve wall and **in that** the snow pick-ups (98) are arranged or formed in the pick-up wheel sleeve wall
and/or
g) the device comprises a drive device (100) for propelling the at least one compressor wheel (86) and/or the at least one pick-up wheel (92).

9. Device in accordance with Claim 7, **characterized in that** the extruding device (84) is in the form of a gear wheel compressor (46), **in that** the gear wheel compressor (46) comprises at least one compressor wheel (86) having a plurality of compressing elements (96) that is mounted such as to be rotatable about a first axis of rotation (88), and at least one pick-up wheel (92) which is mounted such as to be rotatable about a second axis of rotation (90) and cooperates with the at least one compressor wheel (86) and which incorporates a plurality of snow pick-ups (98) for receiving CO₂ snow (36) that are formed in correspondence with the compressing elements (96), and **in that** the device comprises a stripping device (122) for stripping the formed CO₂ pellets (16) from the at least one compressor wheel (86) and/or from the at least one pick-up wheel (92),
wherein, in particular, the stripping device (122) comprises at least one stripping element (124) which is arranged or formed in a compressor wheel sleeve interior space (128) that is defined by the compressor wheel sleeve (112) or in a pick-up wheel sleeve interior space (132) that is defined by the pick-up wheel sleeve (114) or which projects at least partly into said interior spaces,
wherein, further in particular, the at least one stripping element (124) comprises a stripping edge (126) which touches or almost touches a compressor wheel sleeve inner surface (130) of the compressor wheel sleeve (112) that delimits the compressor wheel sleeve interior space (128) or which touches or almost touches a pick-up wheel sleeve inner surface (134) of the pick-up wheel sleeve (114) that delimits the pick-up wheel sleeve interior space (132).

10. Device in accordance with any of the preceding Claims, **characterized in that** the main compressing device (44) comprises a pellet outlet (138) for delivering CO₂ pellets (16).

11. Device in accordance with Claim 10, **characterized in that**
a) the pellet outlet (138) is arranged or formed below the main compressing device (44) in the direction of the force of gravity
and/or
b) the pellet outlet (138) is connected in fluidic manner to an intermediate storage device (80) for intermediate storage of the CO₂ pellets (16) that have been produced,
wherein, in particular, the pellet outlet (138) or the intermediate storage device (80) is connected in fluidic manner to a transfer device (48) for conveying the CO₂ pellets (16) that have been produced into a CO₂ pellet accelerating device (58) for accelerating them.

12. Device in accordance with any of the preceding Claims, **characterized by** a pressure separating device (106) for forming a pressure stage between the expansion device (34) and the pellet outlet (138), wherein, in particular, the pressure separating device (106) comprises at least one gas-tight or substantially gas-tight sealing element (140) and in that the at least one sealing element (140) is arranged between the expansion device (34) and the pellet outlet (138),
wherein, further in particular,
a) the at least one sealing element (140) is formed from CO₂ snow (36), in particular, compressed CO₂ snow (36)
and/or
b) the at least one sealing element (140) is arranged or formed between the at least one compressor wheel (86) and the at least one pick-up wheel (92).

13. Cleaning device (10) for blasting surfaces to be treated with a mixed-flow (12) consisting of a compressed gas (14) and CO₂ pellets (16), **characterized by** a device (42) for producing high-strength CO₂ pellets (16) from CO₂ snow (36) in accordance with any of the preceding Claims,
wherein, in particular, the cleaning device comprises
a) a CO₂ connector (20) for connecting to a source (24) of CO₂ containing liquid CO₂ or for connection by a source (24) of CO₂ which contains liquid CO₂
and/or
b) a compressed gas connector (52) for connecting to a compressed gas producing device (54) or for connection by a compressed gas producing device (56)
and/or
c) a transfer device (48) for transferring the CO₂ pellets (16) into a CO₂ pellet accelerating device (58) for accelerating them
and/or
d) a CO₂ pellet accelerating device (58) which comprises in particular a compressed gas line (50) which is connected in fluidic manner to the compressed gas connector (52) or the compressed gas producing device (54, 56).

14. Cleaning device in accordance with Claim 13, **characterized in that** it comprises a transfer device (48) for transferring the CO₂ pellets (16) into a CO₂ pellet accelerating device (58) for accelerating them and/or a CO₂ pellet accelerating device (58) which comprises in particular a compressed gas line (50) which is connected in fluidic manner to the compressed gas connector (52) or the compressed gas producing device (54, 56), and **in that** the transfer device (48) and/or the CO₂ pellet accelerating device (58) comprise at least one venturi tube (108), wherein, in particular, the transfer device (48) comprises downstream a jet outlet (62) for connecting to a jet line (64) or **in that** the transfer device (48) is connected in fluidic manner downstream to a jet line (64), wherein, further in particular, a jet nozzle (66) is arranged or formed at a free end of the jet line (64).

15. Cleaning device in accordance with Claim 13 or 14, **characterized by** a CO₂ pellet intermediate storage device (80) for intermediate storage of CO₂ pellets (16) that have been produced,
wherein, in particular, the CO₂ pellet intermediate storage device (80) is connected directly or indirectly in fluidic manner to the main compressing device (44) on the one hand and to the transfer device (48) on the other.

## Revendications

1. Dispositif (42) pour la fabrication de pellets de CO₂ (16) à haute résistance à partir de neige de CO₂ (36), en particulier pour un appareil de nettoyage (10) pour exposer des surfaces à traiter à un courant mixte (12) composé d'un gaz comprimé (14) et de pellets de CO₂ (16), comprenant un système de compression principal (44) pour comprimer la neige de CO₂ (36) pour la réalisation de pellets de CO₂ (16) et un système de pré-compression (31) pour pré-comprimer la neige de CO₂ (36) produite par détente de CO₂ liquide, **caractérisé en ce que** le système de pré-compression (31) est réalisé sous forme d'un système de pré-compression (31) se rapportant à la mécanique des fluides, que le système de pré-compression (31) comprend un système d'expansion (34) pour produire de la neige de CO₂ (36) à partir de CO₂ liquide ou gazeux et une chambre de pré-compression (38) pour la réception et la pré-compression de la neige de CO₂ (36) produite et que le système d'expansion (34) et la chambre de pré-compression (38) sont reliées l'un à l'autre de manière fluidique.

2. Dispositif selon la revendication 1, **caractérisé en ce que** le système de pré-compression (31) se rapportant à la mécanique des fluides est réalisé pour produire un courant de CO₂ gazeux dans la chambre de pré-compression (38), lequel est orienté au moins en partie sur une surface de paroi intérieure (170) de la chambre de pré-compression (38),
dans lequel en particulier le système de pré-compression (38) se rapportant à la mécanique des fluides est réalisé pour produire un courant de CO₂ gazeux (168) en spirale ou sensiblement en spirale dans la chambre de pré-compression (38).

3. Dispositif selon l'une quelconque des revendications précédentes, **caractérisé en ce que** le système d'expansion (34) comprend une buse de détente (172) pour détendre le CO₂ liquide ou gazeux.

4. Dispositif selon la revendication 3, **caractérisé en ce que**
a) la buse de détente (172) est disposée et réalisée pour distribuer du CO₂ liquide à l'intérieur de la chambre de pré-compression (38)
et/ou
b) la chambre de pré-compression (38) présente une entrée (158) définissant un axe longitudinal d'entrée (160), que la buse de détente (172) présente au moins une ouverture de sortie de buse (186), que la au moins une ouverture de sortie de buse (186) définit un axe longitudinal de sortie de buse (188) et que l'axe longitudinal d'entrée (160) et l'axe longitudinal de sortie de buse (188) définissent entre eux un angle d'entrée (190), lequel se situe dans une plage d'environ 0° à environ 90°, en particulier dans une plage d'environ 35° à environ 70°,
dans lequel plus particulièrement l'axe longitudinal de sortie de buse (188) et l'axe longitudinal d'entrée (160) se croisent ou s'étendent de manière penchée l'un par rapport à l'autre ou s'étendent parallèlement l'un à l'autre,
et/ou
c) la buse de détente (172) est réalisée sous forme d'une buse à turbulence ou rotative (194 ; 202).

5. Dispositif selon l'une quelconque des revendications précédentes, **caractérisé en ce que** la chambre de pré-compression (38)
a) est réalisée sous forme d'un tube (156)
et/ou
b) définit un axe longitudinal (192) ou est réalisée de manière courbée
et/ou
c) présente une sortie (162) définissant un axe longitudinal de sortie (164),
dans lequel l'axe longitudinal de sortie (164) et l'axe longitudinal d'entrée (160) forment entre eux un angle de chambre (166), lequel se situe dans une plage d'environ 0° à environ 180°, en particulier dans une plage d'environ 45° à environ 135°, plus préférablement l'angle de chambre (166) atteint environ 90°,
et/ou
d) présente un diamètre et une longueur (198) et qu'un rapport entre la longueur (198) et le diamètre (196) se situe dans une plage d'environ 4:1 à environ 20:1, en particulier dans une plage d'environ 6:1 à environ 14:1,
et/ou
e) présente un rayon de courbure (200) et qu'un rapport entre le rayon de courbure (200) et le diamètre (196) se situe dans une plage d'environ 2:1 à environ 10:1, en particulier dans une plage d'environ 2:1 à environ 6:1.

6. Dispositif selon l'une quelconque des revendications précédentes, **caractérisé en ce que**
a) le système de pré-compression (31) comprend une unité de pré-compression mécanique avec au moins un élément de pré-compression disposé de manière mobile pour comprimer la neige de CO₂ (36) produite dans la chambre de pré-compression (38), dans lequel en particulier le au moins un élément de pré-compression est réalisé sous forme d'un organe de pression, en particulier sous forme d'un poinçon ou d'un piston, ou sous forme d'un rouleau,
et/ou
b) le système de pré-compression (31) comprend un raccord de CO₂ (20) à relier à une source de CO₂ (24) contenant du CO₂ liquide,
dans lequel en particulier le raccord de CO₂ (20) est en liaison fluidique avec le système de détente (34),
et/ou
c) le dispositif comprend une source de CO₂ (24) contenant du CO₂ liquide, qui est en liaison fluidique avec le système de pré-compression (31),
dans lequel en particulier la source de CO₂ (24) est un récipient sous pression contenant du CO₂ liquide et/ou la source de CO₂ liquide (24) est en liaison fluidique avec le système de pré-compression (31) par l'intermédiaire d'une conduite de liaison (22).

7. Dispositif selon l'une quelconque des revendications précédentes, **caractérisé en ce que** le système de compression principal (44) est réalisé sous forme d'un système d'extrusion (84),
dans lequel en particulier le système d'extrusion (84) comprend au moins une matrice d'extrusion (116) avec une pluralité de perforations (118),
dans lequel plus particulièrement chacune de la pluralité de perforations (118) définit un axe longitudinal, qui s'étend dans la direction radiale ou sensiblement dans la direction radiale à distance du premier ou deuxième axe de rotation (88, 90).

8. Dispositif selon la revendication 7, **caractérisé en ce que** le système d'extrusion (84) est réalisé sous forme d'un compresseur à roues dentées (46),
dans lequel en particulier le compresseur à roues dentées (46) comprend au moins une roue de compresseur (86) montée de manière à pouvoir tourner autour d'un premier axe de rotation (88) avec une pluralité d'éléments de compression (96) et au moins une roue de réception (92) coopérant avec la au moins une roue de compresseur (86), montée de manière à pouvoir tourner autour d'un deuxième axe de rotation (90) avec une pluralité de logements de neige (98) réalisés de manière correspondante aux éléments de compression (96) pour recevoir de la neige de CO₂ (36),
dans lequel plus particulièrement
a) la pluralité d'éléments de compression (96) est réalisée sous forme de dents (94) faisant saillie dans la direction radiale de la roue de compresseur (86) et/ou que la pluralité de logements de neige (98) est réalisée sous forme d'évidements ouverts dans la direction radiale
et/ou
b) la au moins une roue de compresseur (86) et la au moins une roue de réception (92) sont réalisées de manière identique ou sensiblement identique
et/ou
c) la pluralité de logements de neige (98) est réalisée sous forme d'espaces intermédiaires, qui sont disposés ou réalisés entre la pluralité d'éléments de compression (96)
et/ou
d) chaque logement de neige (98) est en liaison fluidique avec au moins une perforation (118)
et/ou
e) la roue de compresseur (86) comprend un manchon de roue de compresseur (112) avec une paroi de manchon de roue de compresseur et que les éléments de compression (96) sont disposés ou réalisés sur une face extérieure du manchon de roue de compresseur (112)
et/ou
f) la roue de réception (92) comprend un manchon de roue de réception (114) avec une paroi de manchon de roue de réception et que les logements de neige (98) sont disposés ou réalisés dans la paroi de manchon de roue de réception
et/ou
g) le dispositif comprend un système d'entraînement (100) pour entraîner la au moins une roue de compresseur (86) et/ou la au moins une roue de réception (92).

9. Dispositif selon la revendication 7, **caractérisé en ce que** le système d'extrusion (84) est réalisé sous forme d'un compresseur à roues dentées (46), que le compresseur à roues dentées (46) comprend au moins une roue de compresseur (86) montée de manière à pouvoir tourner autour d'un premier axe de rotation (88) avec une pluralité d'éléments de compression (96) et au moins une roue de réception (92) coopérant avec la au moins une roue de compresseur (86), montée de manière à pouvoir tourner autour d'un deuxième axe de rotation (90) avec une pluralité de logements de neige (98) réalisés de manière correspondante aux éléments de compression (96) pour recevoir de la neige de CO₂ (36) et que le dispositif un système de raclage (122) pour racler les pellets de CO₂ (16) réalisés de la au moins une roue de compresseur (86) et/ou de la au moins une roue de réception (92), dans lequel en particulier le système de raclage (122) comprend au moins un élément de raclage (124), lequel est disposé ou réalisé dans un espace intérieur de manchon de roue de compresseur (128) défini par le manchon de roue de compresseur (112) ou dans un espace intérieur de manchon de roue de réception (132) défini par le manchon de roue de réception (114) ou fait saillie au moins en partie dans celui-ci,
dans lequel plus particulièrement le au moins un élément de raclage (124) comprend un bord de raclage (126), lequel touche ou touche presque une surface intérieure de manchon de roue de compresseur (130) du manchon de roue de compresseur (112) délimitant l'espace intérieur de manchon de roue de compresseur (128) ou touche ou touche presque une surface intérieure de manchon de roue de réception (134) du manchon de roue de réception (114) délimitant l'espace intérieur de manchon de roue de réception (132).

10. Dispositif selon l'une quelconque des revendications précédentes, **caractérisé en ce que** le système de compression principal (44) présente une sortie de pellet (138) pour distribuer des pellets de CO₂ (16).

11. Dispositif selon la revendication 10, **caractérisé en ce que**
a) la sortie de pellets (138) est disposée ou réalisée dans le sens de la pesanteur au-dessous du système de compression principal (44)
et/ou
b) la sortie de pellets (138) est en liaison fluidique avec un dispositif de stockage intermédiaire (80) pour le stockage intermédiaire de pellets de CO₂ (16) produits,
dans lequel en particulier la sortie de pellets (138) ou le dispositif de stockage intermédiaire (80) est en liaison fluidique avec un système de transfert (48) pour transférer les pellets de CO₂ (16) produits dans un système d'accélération de pellets de CO₂ (58) pour accélérer ceux-ci.

12. Dispositif selon l'une quelconque des revendications précédentes, **caractérisé par** un système de séparation de pression (106) pour la réalisation d'un étage de pression entre le système d'expansion (34) et la sortie de pellets (138), dans lequel en particulier le système de séparation de pression (106) comprend au moins un élément d'étanchéité (140) étanche au gaz ou sensiblement étanche au gaz et que le au moins un élément d'étanchéité (140) est disposé entre le système d'expansion (34) et la sortie de pellets (138), dans lequel plus particulièrement
a) le au moins un élément d'étanchéité (140) est réalisé à partir de neige de CO₂ (36), en particulier de neige de CO₂ (36) comprimée,
et/ou
b) le au moins un élément d'étanchéité (140) est disposé ou réalisé entre la au moins une roue de compresseur (86) et la au moins une roue de réception (92).

13. Appareil de nettoyage (10) pour exposer des surfaces à traiter à un courant mixte (12) composé d'un gaz comprimé (14) et de pellets de CO₂ (16), **caractérisé par** un dispositif (42) pour la fabrication de pellets de CO₂ (16) à haute résistance à partir de neige de CO₂ (36) selon l'une quelconque des revendications précédentes,
dans lequel en particulier l'appareil de nettoyage comprend
a) un raccord de CO₂ (20) destiné à être relié à une source de CO₂ (24) contenant du CO₂ liquide ou par une source de CO₂ (24) contenant du CO₂ liquide
et/ou
b) un raccord de gaz comprimé (52) destiné à être relié à un système de production de gaz comprimé (54) ou par un système de production de gaz comprimé (56)
et/ou
c) un système de transfert (48) pour transférer les pellets de CO₂ (16) dans un système d'accélération de pellets de CO₂ (58) pour accélérer ceux-ci
et/ou
d) un système d'accélération de pellets de CO₂ (58), lequel comprend en particulier une conduite de gaz comprimé (50) en liaison fluidique avec le raccord de gaz comprimé (52) ou le système de production de gaz comprimé (54, 56).

14. Appareil de nettoyage selon la revendication 13, **caractérisé en ce qu'**il comprend un système de transfert (48) pour transférer les pellets de CO₂ (16) dans un système d'accélération de pellets de CO₂ (58) pour accélérer ceux-ci et/ou un système d'accélération de pellets de CO₂ (58), lequel comprend en particulier une conduite de gaz comprimé (50) en liaison fluidique avec le raccord de gaz comprimé (52) ou le système de production de gaz comprimé (54, 56), et que le système de transfert (48) et/ou le système d'accélération de pellets de CO₂ (58) comprend au moins un venturi (108),
dans lequel en particulier le système de transfert (48) comprend en aval un raccord de jet (62) à relier à une conduite de jet (64) ou que le système de transfert (48) en aval est en liaison fluidique avec une conduite de jet (64),
dans lequel plus particulièrement une buse à jet (66) est disposée ou réalisée à une extrémité libre de la conduite de jet (64).

15. Appareil de nettoyage selon la revendication 13 ou 14, **caractérisé par** un dispositif de stockage intermédiaire de pellets de CO₂ (80) pour le stockage intermédiaire de pellets de CO₂ (16) produits,
dans lequel en particulier le dispositif de stockage intermédiaire de pellets de CO₂ (80) est directement ou indirectement en liaison fluidique d'une part avec le système de compression principal (44) et d'autre part avec le système de transfert (48).
